# EUROPEAN PATENT SPECIFICATION

(11) **EP 1 208 554 B1**
(45) Date of publication and mention of the grant of the patent: **08.06.2005**
(21) Application number: 00950799.7
(22) Date of filing: 28.07.2000
(51) Int. Cl.: G09B 5/14

(54) **METHODS AND APPARATUS FOR COMPUTER BASED TRAINING RELATING TO DEVICES**
VERFAHREN UND VORRICHTUNG ZUM COMPUTERUNTERSTÜTZTEN TRAINING IN DER VERWENDUNG VON GERÄTEN
PROCEDES ET EQUIPEMENT DE FORMATION PAR ORDINATEUR RELATIVE A DES DISPOSITIFS

(30) Priority: 30.07.1999 US 364045; 30.07.1999 US 364046; 30.07.1999 US 364047; 30.07.1999 US 364048; 30.07.1999 US 365243
(43) Date of publication of application: 29.05.2002
(73) Proprietor: Element K Online LLC, Rochester, New York 14623 (US)
(72) Inventor: SLATTERY, Terrance, C., Annapolis, MD 21401 (US); COVILLE, Shawn, G., Manassas, VA 22110 (US)
(74) Representative: Jones, Stephen Anthony
(86) International application number: PCT/US2000/020508
(87) International publication number: WO 2001/009865

(56) References cited:
- WO-A-99/33041
- US-A- 5 727 950
- LEFKOWITZ L S ET AL: "A KNOWLEDGE-BASED INTELLIGENT TUTORING SYSTEM FOR TELEPHONY OPERATIONS SUPPORT SYSTEMS" PROCEEDINGS OF THE INTERNATIONAL CONFERENCE ON COMMUNICATIONS (ICC),US,NEW YORK, IEEE, vol. -, 23 May 1993 (1993-05-23), pages 1880-1884, XP000448446 ISBN: 0-7803-0950-2

## Description

### BACKGROUND OF THE INVENTION

The present invention relates to computer based training, and more particularly, to methods and apparatus for computer based training providing hands-on training related to devices.

Traditionally, students have been taught about devices in a classroom setting where the students were lectured about the devices and presented with written tests.

Although students have been taught in a lab setting, this requires students to travel to a specific location to perform the lab, thus making it difficult and inconvenient for students without easy access to a lab.

Thus, it has been difficult for students to gain hands-on experience regarding devices in a classroom setting, in their office place, or at home. Further, the need for more hands on time with devices is becoming critical for professionals that are working towards certifications such as the CISCO Certified Intemetworking Expert (CCIE) certification, which is the highest certification level bestowed by CISCO.

WO 99/33041 discloses a computer-assisted compliance monitoring system, in which a student user of a client computer system uses a teaching process to promote development of cognitive skills of the student, and a supervisor uses a second client computer to remotely monitor the progress of the student.

Accordingly, there is a need for a distance based solution that provides students with hands-on training with devices.

### SUMMARY OF THE INVENTION

Accordingly, the present invention is directed to methods and apparatus that substantially obviates the above and other disadvantages of the prior art.

According to a first aspect of the invention, there is provided a system for training users, comprising: a device controller that is capable of receiving control information from at least one client computer, the control information reflecting at least one task to be performed by one or more electronic training devices as part of a training exercise, and the device controller is capable of transmitting the control information to at least one of the electronic training devices as part of the training exercise; and a server controller that is capable of receiving exercise start information reflecting a request from the at least one client computer that a training exercise begin, determining initialization information based on the exercise start information received, and transmitting the initialization information to the device controller for the purpose of initializing a set of one or more electronic training devices in accordance with the initialization information; wherein the server controller and the device controller are connected to the at least one client computer via a network.

According to a further aspect of the invention, there is provided a method for training users performed by a training system having at least one client computer that is connected to a device controller and a server controller via a network, and wherein a particular user uses the at least one client computer to communicate with the server controller and the device controller, the method comprising: receiving exercise start information at the server controller reflecting a request from the at least one client computer that a training exercise begin; determining initialization information based on the exercise start information received at the server controller; transmitting the initialization information from the server controller to the device controller for the purpose of initializing a set of one or more electronic training devices in accordance with the initialization information; receiving control information at the device controller reflecting at least one task to be performed by one or more electronic training devices as part of the training exercise; and transmitting the control information from the device controller to at least one electronic training device in the set of one or more devices.

The following detailed description provides examples and explanations to enable others to practice the invention, and should not restrict the scope of the claimed invention. The accompanying drawings, which form part of the description for carrying out the best mode of the invention, show several embodiments of the invention, and together with the description, explain the principles of the invention.

### BRIEF DESCRIPTION OF THE DRAWINGS

In the Figures:
Figure 1 illustrates a block diagram of a computer-based system for training of devices in accordance with methods and systems consistent with the invention;
Figure 2 illustrates a block diagram showing a distributed set of pod controllers, in accordance with methods and systems consistent with the invention;
Figure 3 provides a detailed diagram of a pod controller, in accordance with methods and systems consistent with the invention;
Figure 4 illustrates a graphical interface, in accordance with methods and systems consistent with the invention;
Figure 5 provides a flow diagram for a computer based training system, in accordance with methods and systems consistent with the invention;
Figure 6 illustrates an example page that may be displayed to a user to log in or to request account information, in accordance with methods and systems consistent with the invention;
Figure 7 illustrates a page that may be used for setting up a user account, in accordance with methods and systems consistent with the invention;.
Figure 8 illustrates Relay Control Boxes, in accordance with methods and systems consistent with the invention.
Figure 9 illustrates a block diagram of a pod controller including a wiretap, in accordance with methods and systems consistent with the invention;
Figure 10 provides an illustration of a Virtual Classroom, in accordance with methods and systems consistent with the invention;
Figure 11 provides a flow diagram for the virtual classroom, in accordance with methods and systems consistent with the invention;
Figure 12 illustrates a logical diagram of a skills learning module, in accordance with methods and systems consistent with the invention;
Figure 13 provides a logical description of information that may be stored by the assignment and story submodule, in accordance with methods and systems consistent with the invention;
Figures 14a and 14b illustrate an example of an assignment and story submodule, in accordance with methods and systems consistent with the invention;
Figure 15 illustrates an example of a page that provides a user with a suggested approach, in accordance with methods and systems consistent with the invention;
Figure 16 illustrates a template for a page that provides a user with a sample solution, in accordance with methods and systems consistent with the invention;
Figures 17a - 17e illustrate an example of an html page that provides a sample solution, in accordance with methods and systems consistent with the invention;
Figures 18a - 18e illustrate an example of a page for the check results module, in accordance with methods and systems consistent with the invention;
Figures 19a - 19e illustrate an example of a page for the check results module, in accordance with methods and systems consistent with the invention.
Figure 20 illustrates an example of a page that includes archived information for a lab, in accordance with methods and systems consistent with the invention.
Figure 21 provides an illustration of an assessment engine that uses a wiretap to check the configuration of the devices, in accordance with methods and systems consistent with the invention; and
Figure 22 illustrates an embodiment in which the server and controller contains an assessment engine, in accordance with methods and systems consistent with the invention.

### DETAILED DESCRIPTION OF THE INVENTION

Reference will now be made in detail to embodiments of the invention, examples of which are illustrated in the accompanying drawings. Wherever possible, the same reference numbers will be used throughout the drawings to refer to the same or like parts.

### Engine

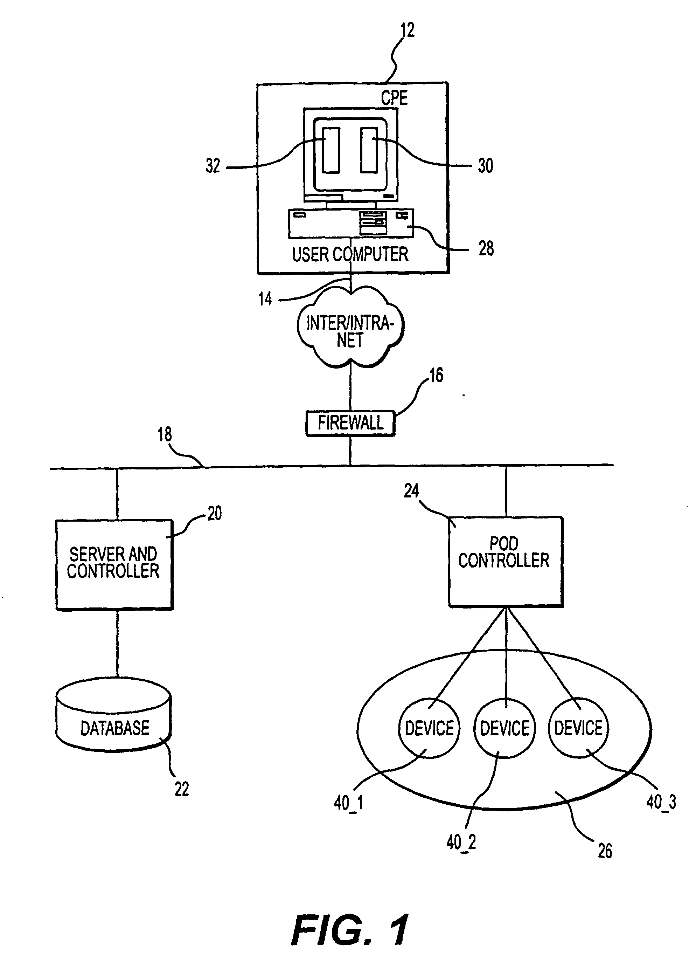

Figure 1 illustrates a simple block diagram of a computer-based system for training relating to devices. As shown, the system preferably includes customer premise equipment 12, a communications link 14, a firewall 16, a communications link 18, a server and controller 20, a database 22, a pod controller 24, and a pod 26. The Customer Premise Equipment (CPE) 12 preferably includes a computer 28 provided with a browser program 30 and a network application program 32. The browser 30 is preferably a browser for Internet/Intranet communications, such as a Netscape Navigator™ browser or a Microsoft Internet Explorer™ browser. The network application program 32 may be a program such as TELNET. The communications link 14 preferably traverses the Internet or an Intra-net. The pod controller 24 may control one or more pods 26 each of which may contain one or more user devices 40_1 to 40_3. In one embodiment, the user devices 40_1 to 40_3 are network equipment, such as CISCO type switches or routers. In other embodiments, these user devices may be Programmable Logic Controllers (PLCs), Chemistry Equipment, or any other type of device. Further, a pod controller 24 may also control one or more infrastructure devices (not shown). These infrastructure devices provide an authentic environment for which a real world scenario may be written.

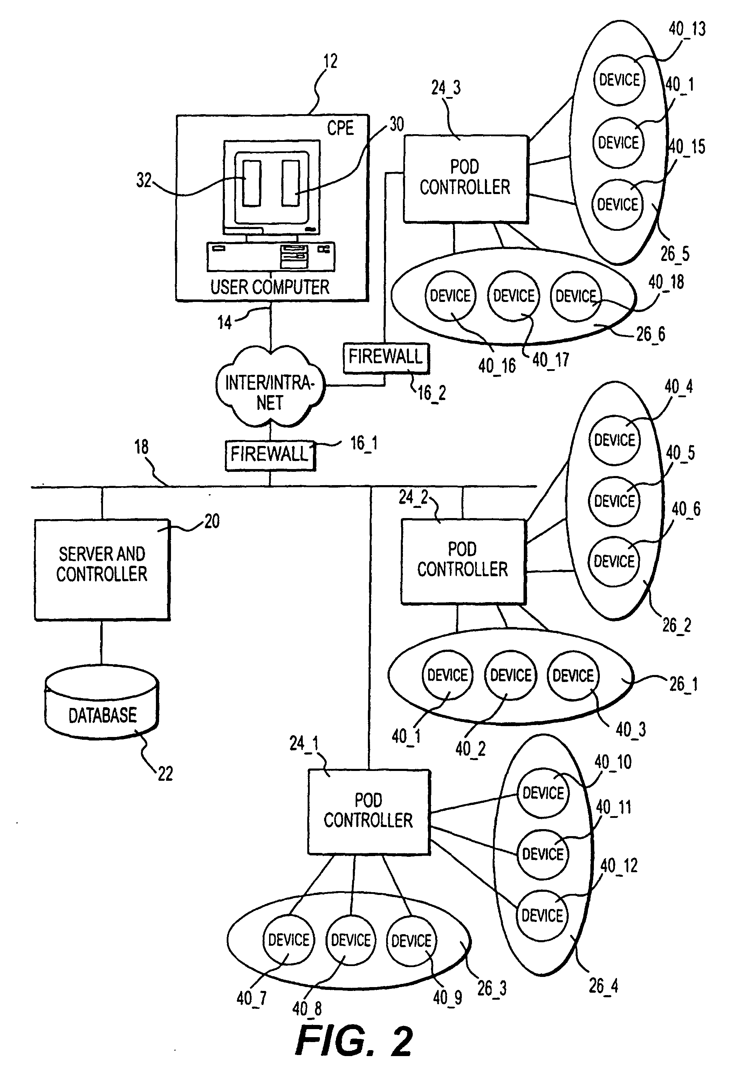

Figure 2, illustrates a simple block diagram of an embodiment with multiple pod controllers 24_1 to 24_3. In this embodiment, pod controllers 24_1 and 24_2 are behind firewall 16_1, and pod controller 24_3 is behind firewall 16_2.

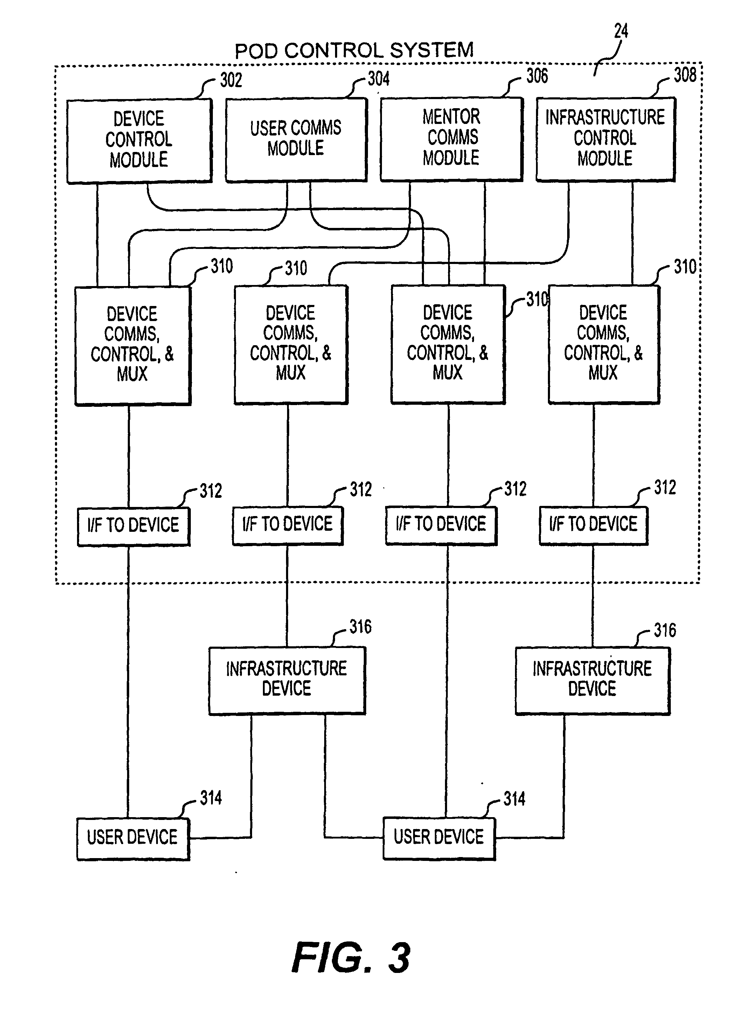

Figure 3 provides a more detailed diagram of the pod controller 24, consistent with an embodiment of the invention. The pod controller 24 may include a device control module 302, a user communications module 304, a mentor communications module 306, an infrastructure control module 308, a device communications, control, and multiplexor module 310, and an interface to device module 312. The pod controller 24 may be connected to user devices 314, and infrastructure devices 316.

The device control module 302 is used to control user accessible devices. It incorporates the control software that enables the pod control system to load starting configurations into the user devices, reset the user devices, and save final configurations. The control within this module preferably is high level and generic across all devices, increasing the modularity and maintainability of the overall system.

The user communications module 304 operates such that when a user connects to a user device, the connection is made though the user communications module. This module receives the connection from the network and validates the user's authorization to access specific devices. This module further translates information received by a user in one protocol into a protocol for feeding into the user device.

The mentor communications module 306 permits a mentor to monitor and participate in controlling the user devices during a learning exercise. The mentor communications module 306 authenticates and authorizes the mentor to connect to specific devices through a computer. A mentor may be a program, such as an Artificial Intelligence program, a person, or any type of hardware or software capable of aiding a user in learning about the user device and its operation.

The infrastructure control module 308 allows additional devices to be interconnected to the user devices in order to replicate real-world scenarios. These devices are part of the infrastructure and require separate control by the pod controller. As such, this module provides the control of the infrastructure devices that are needed to create a real-world scenario for the user. The infrastructure devices 316 are discussed in greater detail below. Further, this module, in conjunction with device, communications, control and multiplexer modules 310, permits devices to be moved between pods connected to the pod controller 24. This will be discussed in further detail below.

A device communications, control, and multiplexor module 310 provides low-level communications and control for each device. In addition, this module provides a mechanism for multiple modules to simultaneously communicate with a single device. Further, as discussed above, this module permits devices to be moved between pods connected to the pod controller 24. For example, Figure 2 illustrates user device 40_4 as part of pod 26_2. If a user wishes to perform an assignment that needs four user devices, the device communications, control, and multiplexor module 310 for user device 40_4 may be reconfigured to move user device 40_4 into pod 26_1. Further, the infrastructure control module 308 may also be reconfigured so that the infrastructure devices necessary for supporting this move are also reconfigured. Thus, pod 26_1 would now include four user devices so that a user wishing to perform the assignment can use pod 26_1 and pod controller 24_2.

The interface to device module 312 is generally implemented in a combination of hardware and software, and provides the pod controller 24 with the capability of the pod controller 24 to communicate directly with the device. For example, if the device 314 uses an RS-232 or similar interface, this module may include software and hardware for implementing an RS-232 connection to the device. Other connection types are possible, such as Ethernet, and the connection type will be dependent on the specifics of the device. Further, this module is capable of receiving information from a user in an application layer protocol, such as TELNET, and translating it so that the information can be communicated directly to a user device.

Each of the modules may be implemented by software running on a processor or computer. As will be obvious to one skilled in the art, all of these modules may be implemented on a single processor, or multiple processors may be used. A variety of computer programming languages may be used to implement the software programs.

The infrastructure devices 316 permits user devices 314 to be interconnected into realistic configurations. The infrastructure devices are not directly accessible by the user. However, the system may implement functions that affect the configuration of these devices depending upon the user's actions. For example, a Frame Relay switch may be used to implement a wide area network connection between user devices. Such a switch may need to be configured and controlled for specific exercises, but because multiple users may need to share it, the switch will not be directly available to the user.

The server and controller 20 may be a computer including memory, a processor, a communications port, a display screen, keyboard, and a mouse. Further, the server and controller 20, for example, may be a web server, such as an Apache or an AOL Server, that uses the Common Gateway Interface (CGI) to allow programs to be executed within the server and controller 20. These programs may provide services to a user via the web such as static web pages, a scheduling mechanism to allow a user to schedule the execution of a specific lab or course at a given time, a lab or course catalog displayed via a web page showing all labs or courses which can be executed, an electronic commerce engine through which users may purchase labs or courses online, and/or a web page which provides a graphical interface for accessing the user devices in specific labs and initiating device control software.

The server and controller 20 may directly provide static web pages or they may be dynamically created from templates and other data contained within a system database. A scheduling component may interface to a database of reservations to determine the availability of devices for a lab. Further, the scheduling component may have the capability to add, delete, or change a user's schedule. A course catalog may include a nearly static page generated from a database of existing labs or courses. This page may be displayed to a user as an html web page. Further, the server and controller 20 may connect to one or more systems, such as electronic commerce systems, training/student management systems, personnel records systems, etc. This connection may be over an Internet, or such systems may reside within the server and controller 20. An electronic commerce system is a system for conducting commerce such as on-line ordering and accepting credit payments over an Internet.

The server and controller 20 may send either static or dynamic web pages to the user's CPE 12 so that they may be displayed to the user through their browser. The content of the user interface page may contain buttons and hot links for the user to invoke the device-specific operations necessary to control the user devices for the purposes of accomplishing a lab or course.

The user computer 28 may be a standard user computer such as an IBM compatible Personal Computer (PC) or Macintosh. Further, the user computer may include a memory, a processor, a keyboard, a mouse, and a port for receiving and transmitting information. The keyboard and mouse may be used by a user to enter information into the computer. The memory may be used for storing programs, such as the browser and network applications programs. The processor may be used for executing these programs. The display screen may be used for displaying information to the user such as html pages, and screens for the browser and network applications programs. The communications port may be used for sending and receiving information over a communications link.

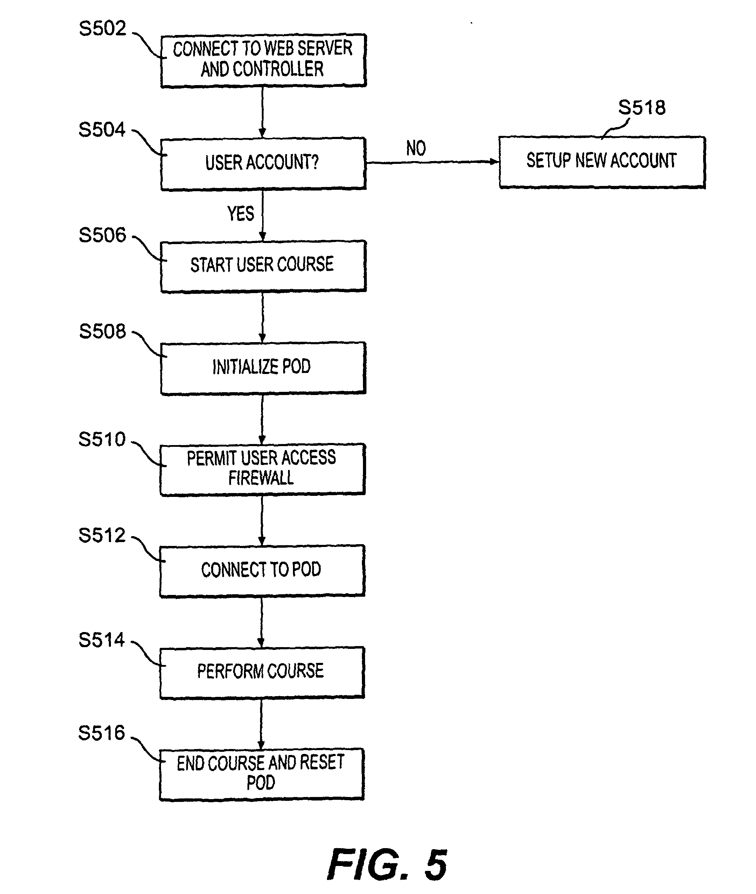

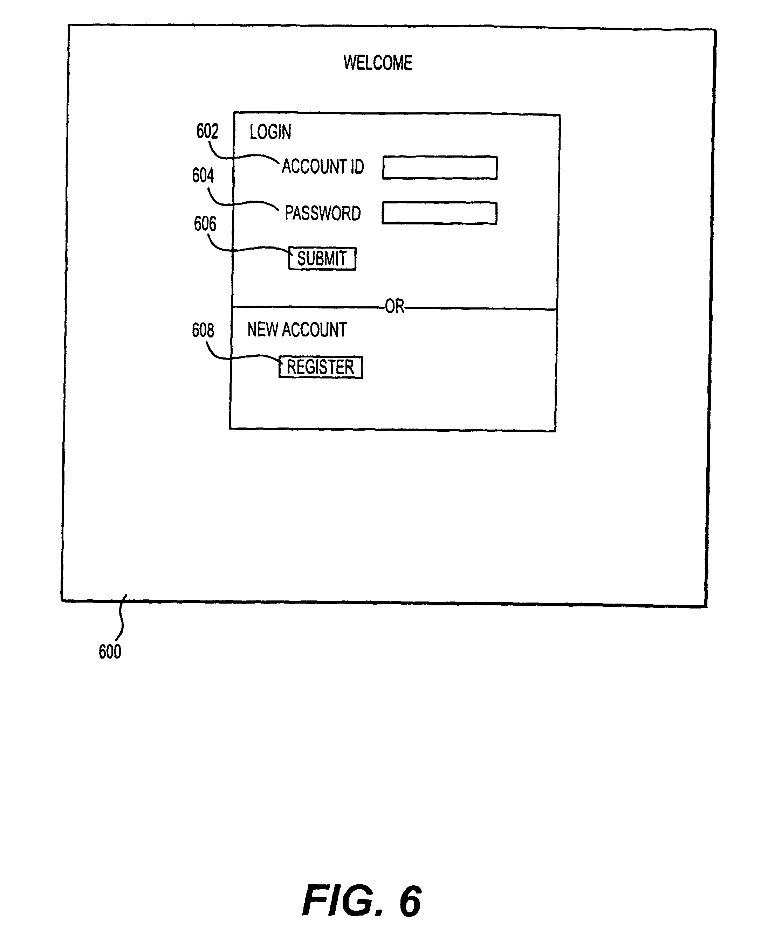

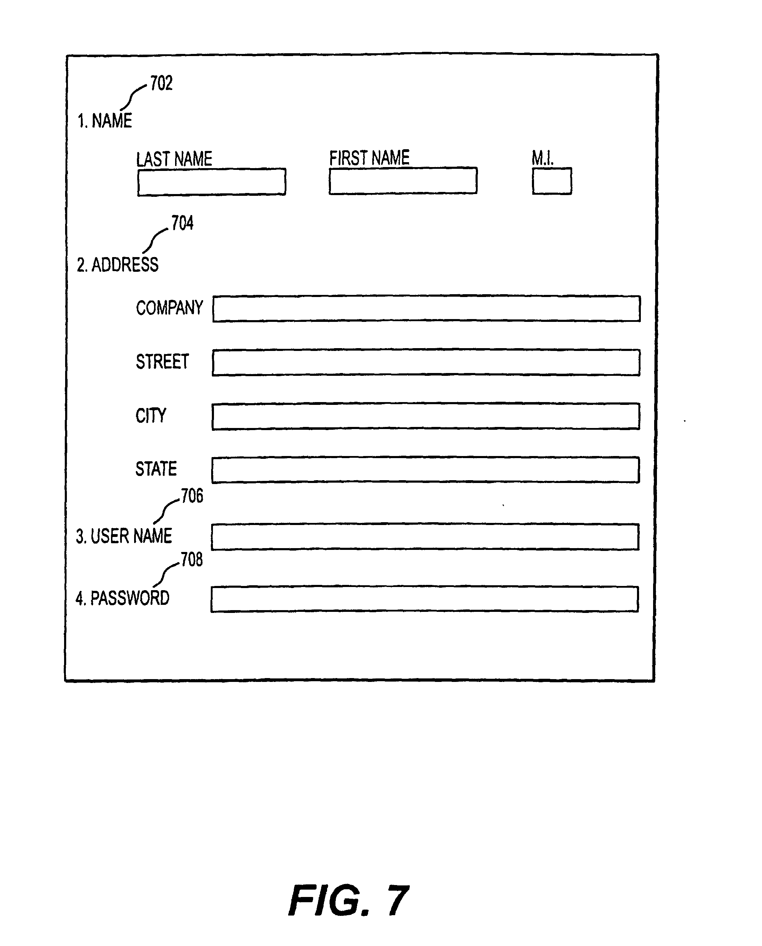

Figure 5 provides a flow diagram for the computer based training system of Figure 1. A user initializes the system by instructing the browser 30 on his/her computer 28 to connect to the server and controller 20 (S502). The firewall 16 is preferably set up to allow the browser 30 and server and controller 20 to freely communicate. The server and controller 20 preferably displays a page to the user requesting an account identification and password and then uses this information to determine if the user has an account (S504). Figure 6 illustrates an example html page 600 that may be displayed to a user to request a user's account identification 602 and password 604. The user can then click on the submit button 606 to submit the information once it has been entered. The user account may contain, among other things, a course for the user and course specific information. If the user has an account, the course is selected and started (S506). If the user does not have an account, he/she is directed to a page for setting up a user account (S518). For example, as illustrated in Figure 6, a user without an account identification is directed to click on a Register button 608. Figure 7 illustrates an html page 700 that may be used for setting up a user account. This page may request, for example, his/her name 702, address 704, a user name 706, and a password 708.

After the course is selected, the server and controller 20 sends an instruction to the pod controller to initialize a pod 26 associated with the selected course (S508). Further, the server and controller 20 sends an instruction to the firewall 16 to permit the user's CPE 12 to access the pod controller 24 (S510). The user then connects to the pod controller 24 using a network application program 32, such as Telnet (S512). Through this mechanism, the user can exercise control over the user devices and perform the assigned training exercise (S514).

A graphical interface may be presented to the user that includes buttons and/or hot links regarding the various user devices. These buttons and/or hotlinks may be used by the user to perform various functions regarding the user devices. The graphical interface may include a button for resetting a user device to its initial starting configuration, a button for saving an existing configuration, a button for loading a new configuration, or a button for forcing the user device into a diagnostic control mode. The user may perform these functions by clicking on a specifically labeled button on the graphical interface. The specific buttons or hotlinks and their respective functions will depend on the specifics of the user devices that make up the lab or course. For example, a chemistry lab may use buttons for controlling a mechanical shuttle which moves a beaker to different locations within an experiment, the addition of a chemical to the beaker, controlling a heating element, or controlling the agitation of the solution within the beaker.

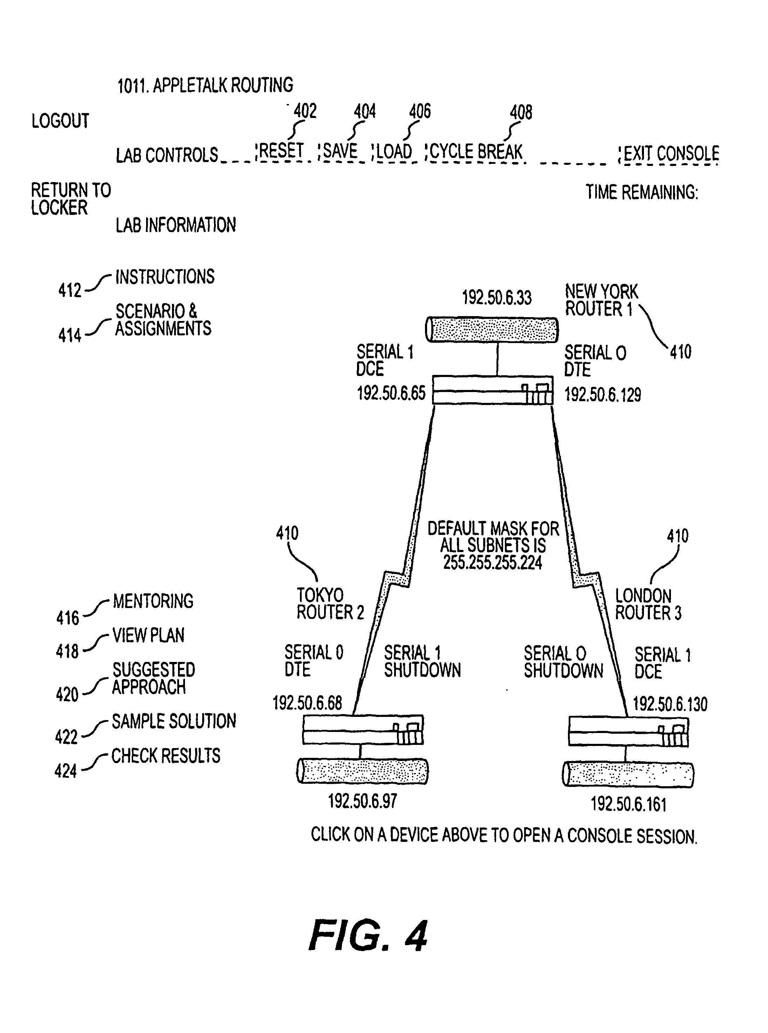

Figure 4 provides an example of a graphical interface a user may see when interacting with a lab including three Cisco routers. The available functions in this example are: reset 402, save configuration 404, load configuration 406, and cycle-break 408. The user may click on the icon 410 of a user device to open a communications connection to the user device when completing the objectives of the lab or course. Further, in this example, the user may click on links for the instructions 412, scenario and assignment 414, mentoring 416, view plan 418, suggested approach 420, sample solution 422, and check results 424. By clicking on one of these links, the user will be taken to an associated web page. These links will be discussed in greater detail later.

After completion of the course, the user's CPE 12 is disconnected from the user devices 40_1 to 40_3 by the pod controller 24, and the user devices are reset to their original settings (S516). For routers, these user devices can be reset by sending a specific sequence to the router that permits the system to gain access to the router even if the user alters the passwords for the router. This may be accomplished by turning off the router, and then turning it back on. During the boot up, control characters can be sent to the router to cause it to enter ROM mode. Once the router is in ROM mode, the user device can be reset so that another user can use the user devices regardless of what the previous user did to the user device.

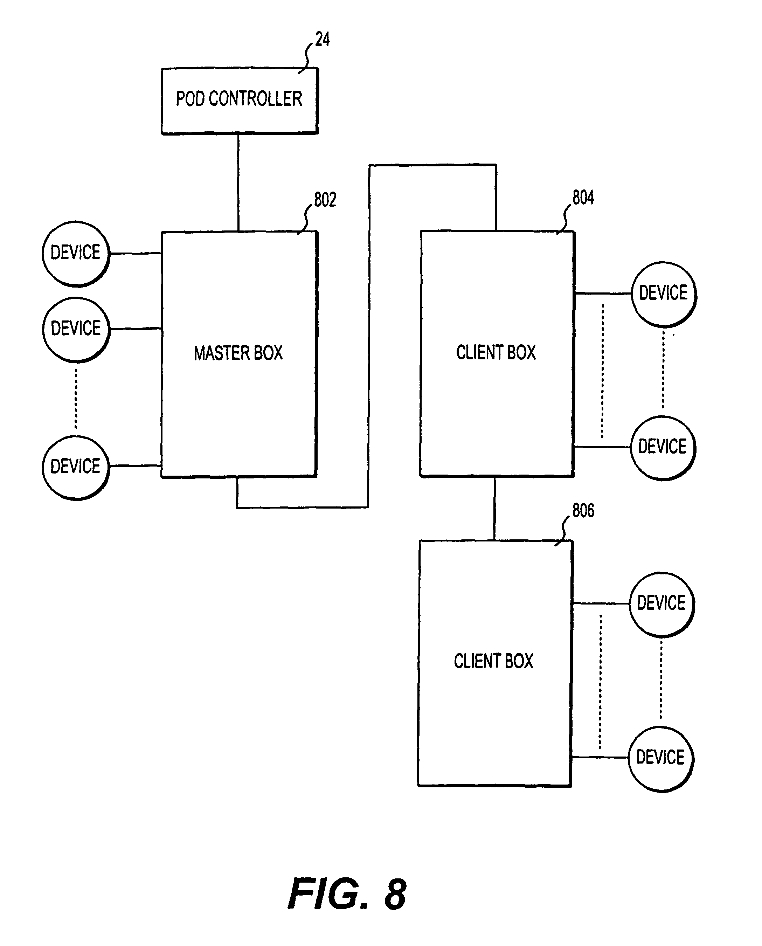

If the user device is a CISCO-type switch, a specific button needs to be pushed during power up in order to enter ROM mode. This switch may be replaced by a relay to close the switch. Thus, the pod controller could reset this user device by closing the relay, or by manually operating the switch. As an example, Figure 8 illustrates three Relay Control Boxes 802, 804, and 806 for resetting devices in which a physical switch needs to be pressed at a particular point in time. Each Relay Control Box may include eight internal relays for controlling eight independent devices. Each relay replaces the physical switch in the device. As illustrated, a master Relay Control Box 802 is connected directly to the Pod Controller 24, and each client Relay Control Box 804 and 806 is serially connected to the master Relay Control Box 802. When a device is to be reset, the pod controller 24 sends an address for the device to the Relay Control Boxes 802, 804, and 806. The Relay Control Boxes 802, 804, and 806 then use this address to close a relay associated with this address that in effect closes the switch for the device. Thus, the Relay Control Boxes and Pod Controller can individually open and close the switches for the particular devices. This example is provided as merely one possible implementation, and as will be obvious to one of skill in the art numerous other implementations are possible. Further, the specifics of how to reset a device will depend on the particulars of the specific device.

In one embodiment, user devices 40_1 to 40_3 are CISCO-type routers and are connected to the pod controller through a COM port. In this embodiment, the pod controller 24 converts the user information from the application layer format it is received in (for example, TELNET) to a format that can be sent to the router through the router's COM port. This is preferably accomplished by the user communications module 304 of the pod controller 24.

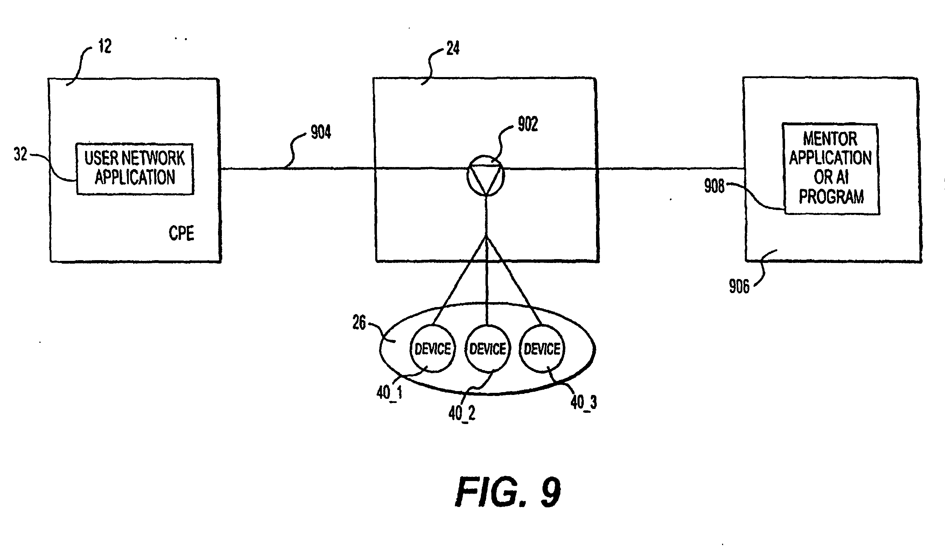

Figure 9 illustrates a block diagram of a pod controller 24 including a wiretap 902 , according to an embodiment. As shown, the pod controller of this embodiment is connected to a user's network application program 32, such as TELNET, over a network connection 904 that preferably includes, referring back to Figure 1, a communications link 14 from the CPE 12 to the firewall 16 and a connection from the firewall 16 to the pod controller 24 over communications link 18. Also connected to the wiretap 902 is a mentor's equipment 906 operating a network application 908, such as Telnet. Through this mechanism, a mentor can monitor the instructions the user is sending to the user devices in the pod. As such, the mentor can "watch" what the user is doing, so that the mentor can ensure that the user is properly controlling the user device. Various software and hardware can be used to implement the wiretap. For example, KIBITZ, a program available with the freeware package EXPECT, allows two users to collaborate over a network while interacting with a single program. Thus, by using one KIBITZ for each user device, everything the user types can be seen by the mentor, and visa versa. Other programs with similar functionality may also be used to achieve this type of operation. The wiretap 902 may be implemented in the device communications, control, and multiplexor module 310 of the pod controller 24.

Additionally, this wiretap may permit the mentor to take control of the user devices in the pod so that the user can "watch" the instructions the monitor is sending to the user devices. Thus, the mentor can show the user how to correctly operate the user devices to perform a task. In another embodiment, the wiretap may be connected to an Artificial Intelligence program that oversees the user's operation of the user devices.

### Virtual Classroom

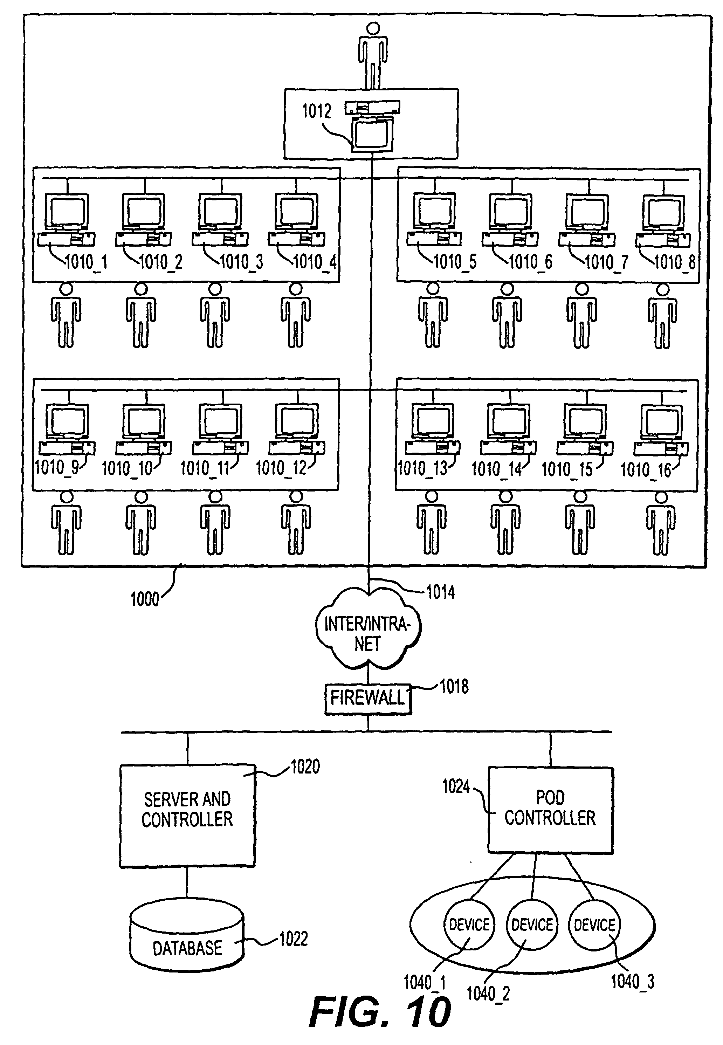

Figure 10 provides an illustration of a Virtual Classroom, 1000 consistent with an embodiment of the invention. As shown, the Virtual Classroom 1000 preferably includes a plurality of student terminals 1010_1 to 1010_16, an instructor terminal 1012, a communications link 1014, a firewall 1018, a server and controller 1020, a pod controller 1024, and a pod. The pod preferably includes a plurality of user devices 1040_1 to 1040_3. The number of devices needed will depend on the class objectives. The server and controller is optionally connected to a database 1022 that stores class specific information. The student terminals 1010_1 to 1010_16 each preferably include a browser (not shown) that may be a browser for Internet/Intranet communications, such as a Netscape Navigator™ browser or a Microsoft Internet Explorer™ browser. Further, each student terminal 1010_1 to 1010_16 preferably includes a network application (not shown) for sending control information to the user devices. In one embodiment, the network application program is TELNET. The communications link can be any type of communications link, and may be, for example, a link across an Internet or Intra-net. Further, a server (not shown) may be used to connect the student and instructor terminals to an Internet or Intra-net that links the terminals to the server and controller 1020 and pod controller 1024.

Individual students need not be located at the same physical location. For example, one student may be located at one physical location, another student may be located in a physical location in a different city, a third student may be located in yet another city, and so on. The communications between the instructor and students can be supported using a variety of communications applications. For example, ILINC, Placeware, or Caliver communications applications may be used for supporting these communications. Further, the class can be conducted synchronously or asynchronously.

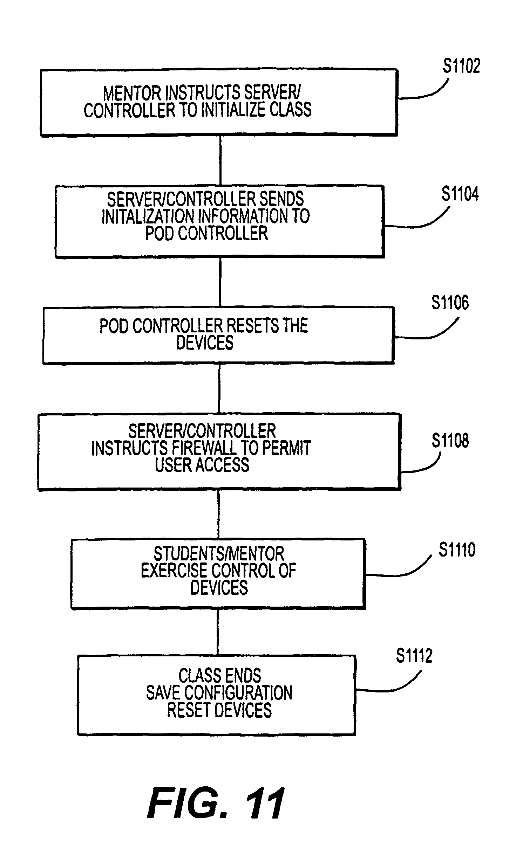

Figure 11 provides a flow diagram for the virtual classroom, consistent with the invention. An instructor initializes the class session by sending information from the instructor terminal 1012 to the server and controller 1020 (S1102). The server and controller 1020 then sends initialization information to the pod controller 1024 (S1104). The pod controller then resets the user devices 1040_1 to 1040_3 (S1106). The server and controller 1020 then instructs the firewall 1018 to permit the student terminals to access the pod controller 1024 (S1108). Through this system and mechanism students can be trained regarding controlling a user device by exercising actual control over the user devices in the pod (S1110).

After the class ends, the instructor can instruct the server and controller 1020 to save the configurations of the user devices 1040_1 to 1040_3 to allow the class to pick up where it left off at a later time. The user devices are then preferably reset to permit another class to use the user devices (S1112).

### Organization of Learning Structure

Traditionally, students are taught using a learning structure that involves an instructor first lecturing or telling students about a subject, such as how to operate a device. Next, the instructor shows the students how to perform the task, and finally students are provided with a task and asked to perform it.

In an embodiment of the invention, rather than first instructing the students regarding the operation of a device, students are invited to try and perform a task regarding the device. If the student is unable to perform the task they are provided with a first level of help. This first level of help includes clues or hints regarding performing the task and top-level information. If the student needs further help, he/she is provided with a second level of information. This second level of information includes detailed information regarding performance of the task, and in one embodiment includes showing the user the exact steps to take in order to perform the task.

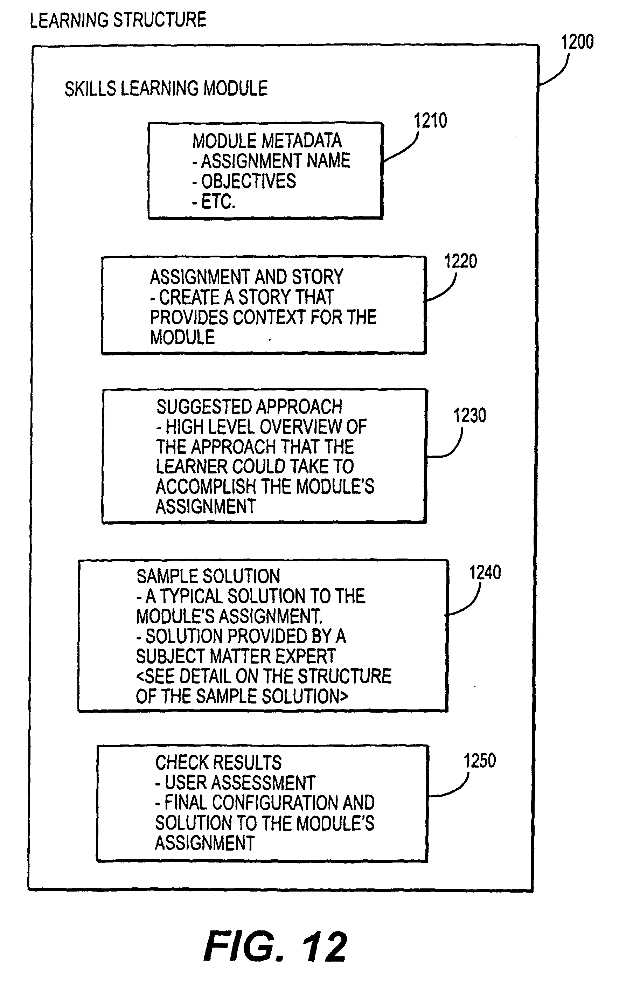

Figure 12 illustrates a logical diagram of a skills learning module 1200 consistent with the invention. The skills learning module 1200 may include module metadata 1210, an assignment and story module 1220, a suggested approach module 1230, a sample solution module 1240, and a check results module 1250. In an embodiment, the skills learning module is stored in database 22 along with each of its submodules. Each of these submodules may be presented to a user in the form of a web page in an html format. By structuring the data in a hierarchical manner, the user may view only that information which is needed at a particular time.

Module metadata 1210 is a set of data that describes the learning module, and may include information regarding the learning environment for the module, the author of the module, the difficulty level, target audience, and other like information. For example, module metadata 1210 may include the assignment's name, its difficulty, the expected time to complete it, its authorship, and the skills or knowledge that it exercises.

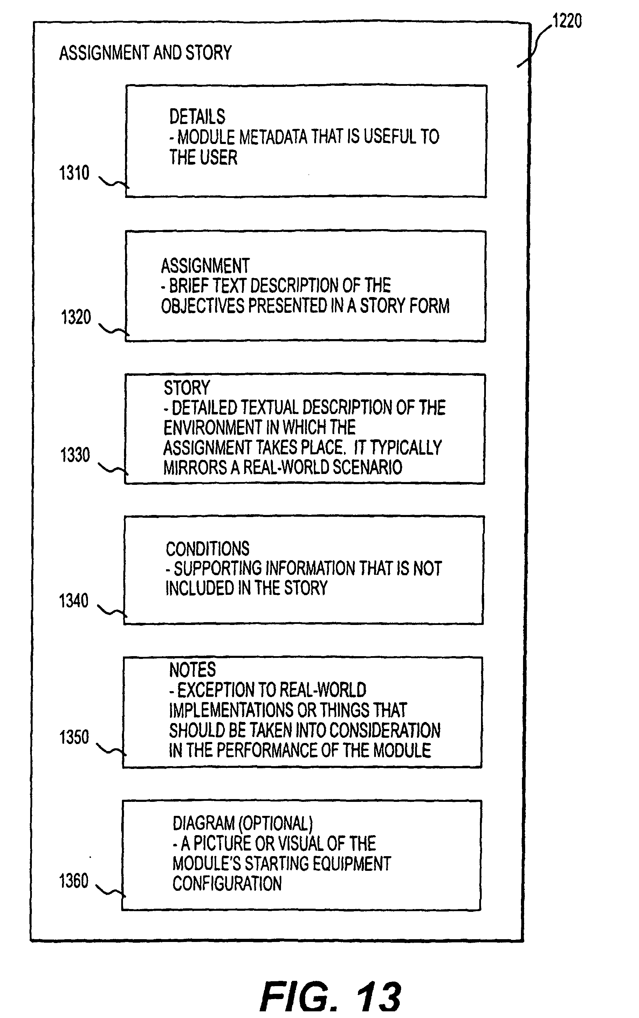

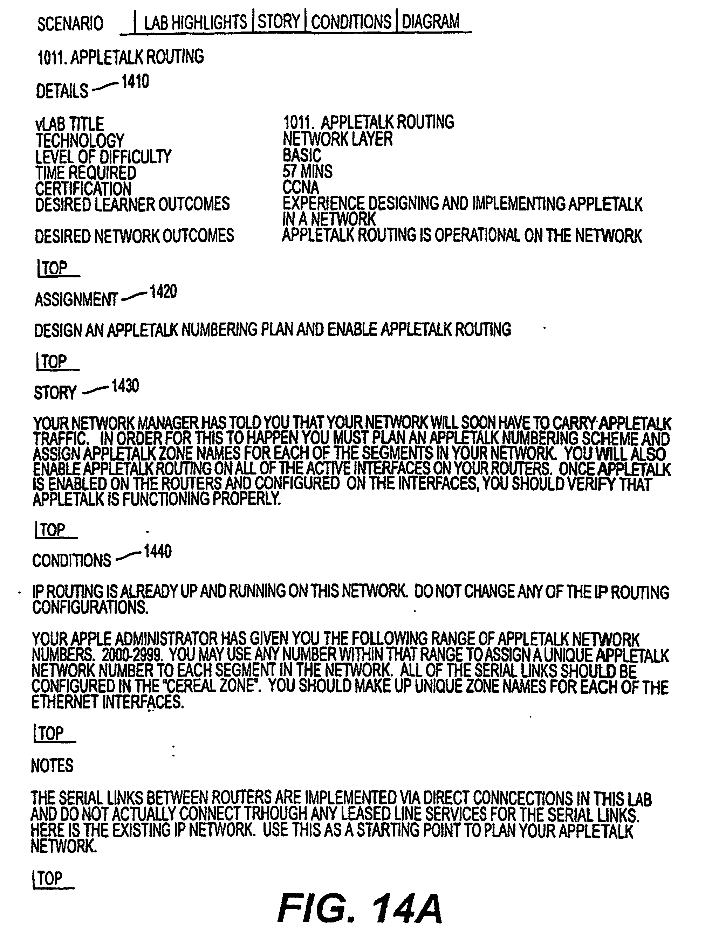

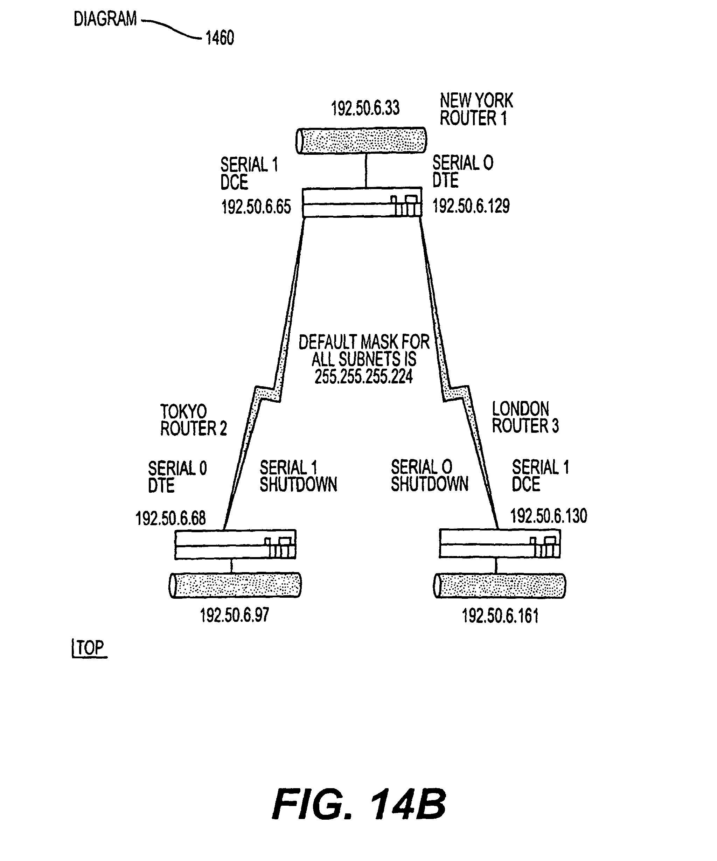

The assignment and story submodule 1220 stores information regarding the context of an assignment so that a user may frame the learning experience in the real world. Figure 13 provides a more detailed logical description of information that may be stored by the assignment and story submodule 1220. As illustrated the assignment and story submodule 1220 may include a details submodule 1310, an assignment submodule 1320, a story submodule 1330, a conditions submodule 1340, a notes submodule 1350, and a diagram submodule 1360. Figure 14 illustrates an example of an assignment and story submodule that may be presented to a user in the form of an html web page.

The details submodule 1310 provides module metadata that is useful to the user. For example, as illustrated in Figure 14, the details submodule may include data regarding the title of the assignment, the technology involved, the level of difficulty, the amount of time to complete the task, the certification it may be used for, the desired learner outcome, and the desired network outcomes.

The assignment submodule 1320 provides a brief textual description of the environment in which the assignment takes place. For example, as illustrated in Figure 14, the assignment submodule 1420 describes the assignment as designing an Appletalk numbering plan and enabling Appletalk routing.

The story submodule 1330 provides a detailed textual description of the environment in which the assignment takes place. It typically mirrors a real-world scenario. For example, as illustrated in Figure 14, the story submodule 1430 describes the story for the assignment as: "Your network manager has told you that your network will soon have to carry Appletalk traffic. In order for this to happen you must plan an Appletalk numbering scheme and assign Appletalk zone names for each of the segments in your network. You will also enable Appletalk routing on all of the active interfaces on your routers. Once Appletalk is enabled on the routers and configured on the interfaces, you should verify that Appletalk is functioning properly."

The conditions submodule 1340 provides supporting information. For example, as illustrated in Figure 14, the conditions submodule 1440 may include information such as:
"IP routing is already up and running on this network. DO NOT CHANGE ANY OF THE IP ROUTING CONFIGURATIONS.
Your Apple administrator has given you the following range of Appletalk network numbers, 2000-2999. You may use any number with that range to assign a unique Appletalk network number to each segment in the network.
All of the serial links should be configured in the 'cereal zone.' You should make up unique zone names for each of the Ethernet interfaces."

The notes submodule 1350 provides exceptions to real-world implementations or things that should be taken into consideration in the performance of the module. For example, as illustrated in Figure 14, the notes submodule states that the exceptions to real world conditions for this assignment are that the serial links between routers are implemented via direct connections in this lab and do not actually connect through any leased line services for the serial links.

The diagram submodule 1360 provides a picture or visual of the module's starting equipment. For example, as illustrated in Figure 14, the diagram submodule 1460 illustrates three interconnected routers.

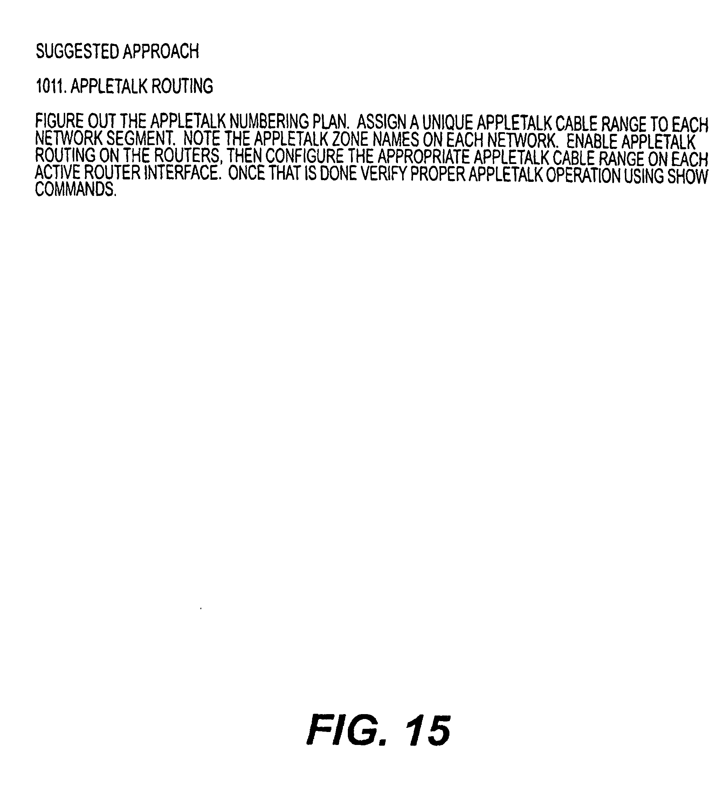

The suggested approach submodule 1230 (Fig. 12) provides a high level description of an approach that the learner could take to accomplish the module's assignment. Figure 15 illustrates an example of a page that provides a user with a suggested approach. As illustrated, in this example, the suggested approach is for the user to: "Figure out the Appletalk numbering plan; assign a unique Appletalk cable range to each network segment; note the Appletalk zone names on each network; enable Appletalk routing on the routers; configure the appropriate Appletalk zone names on each active router interface; then verify proper Appletalk operation using show commands."

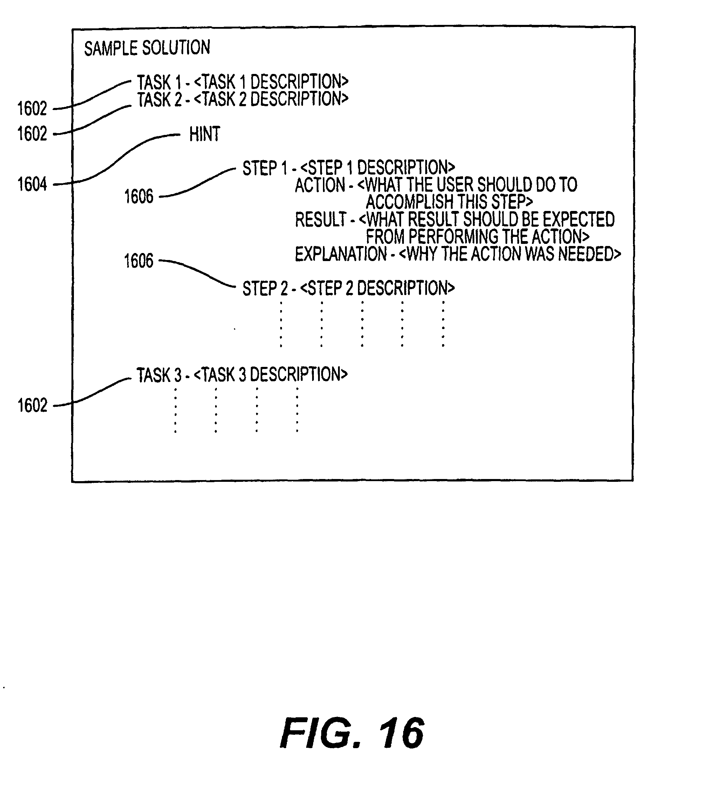

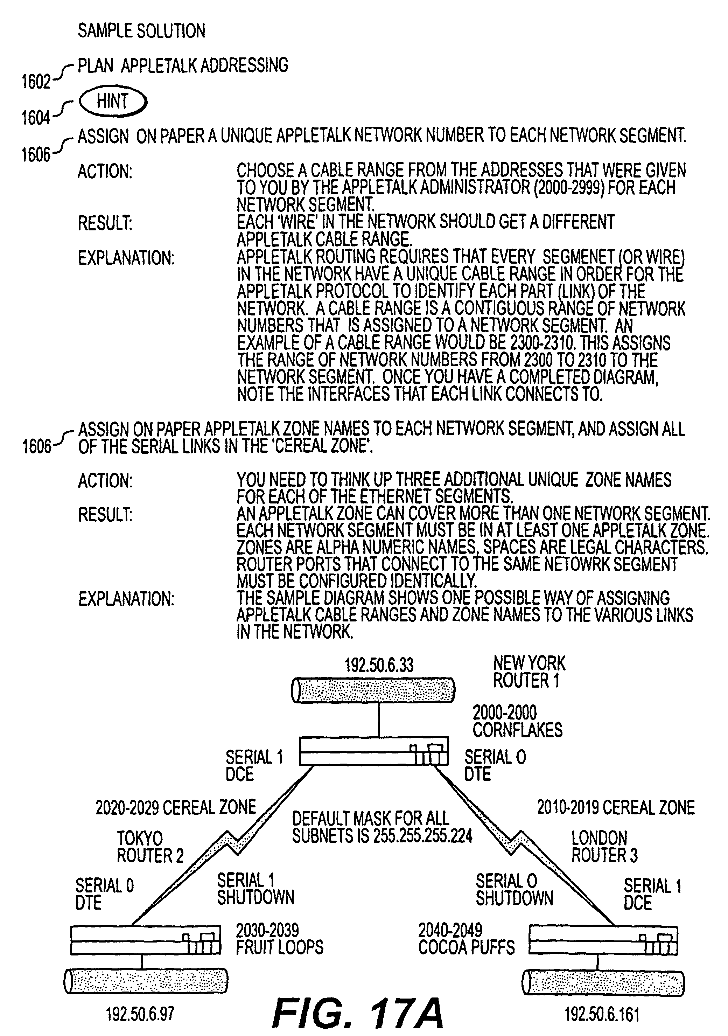

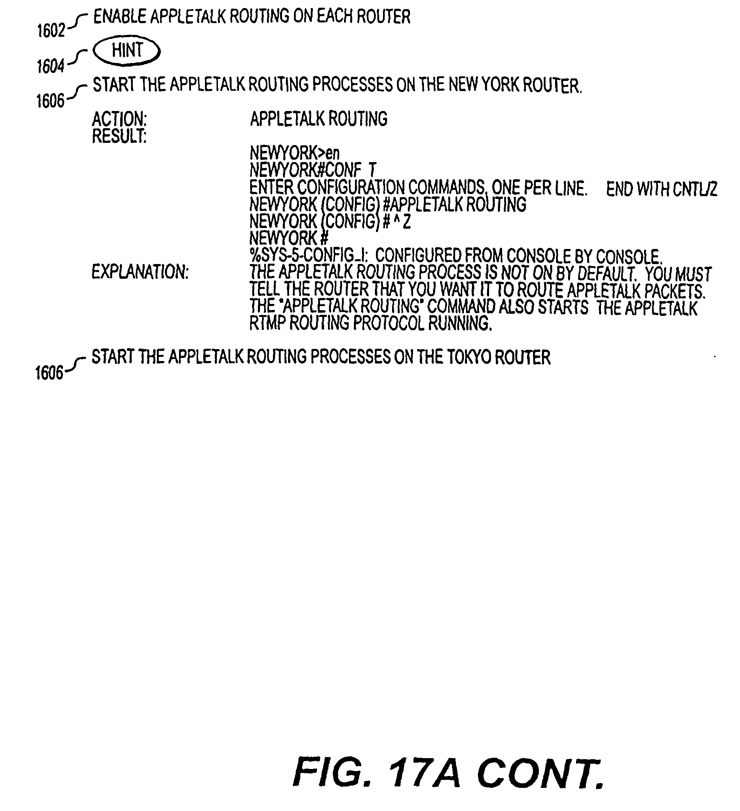

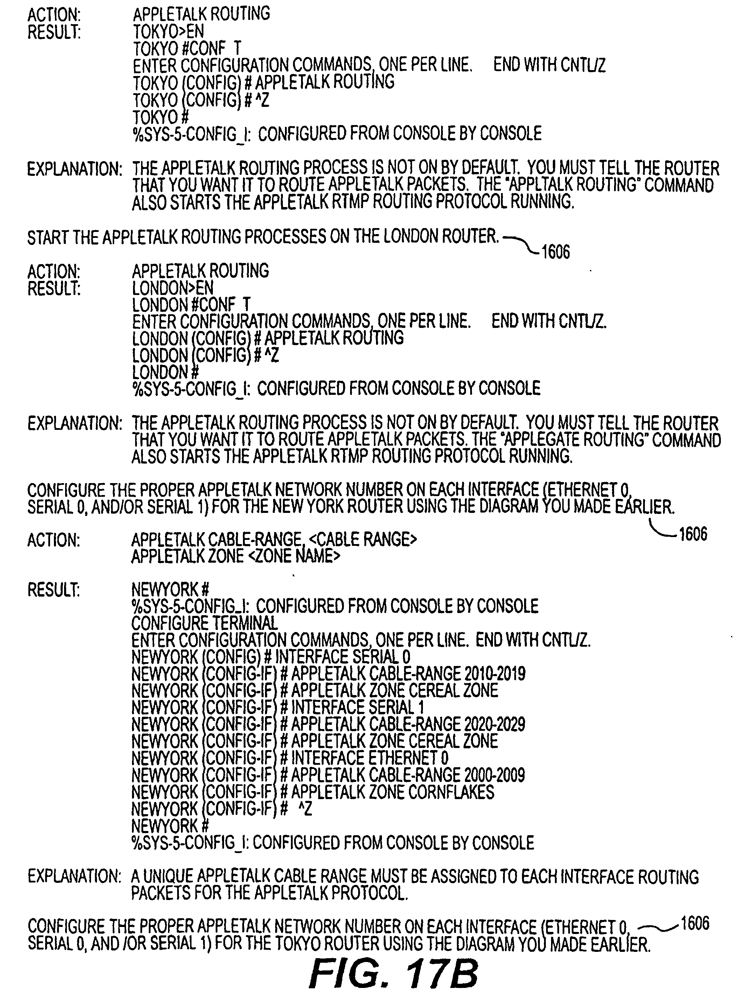

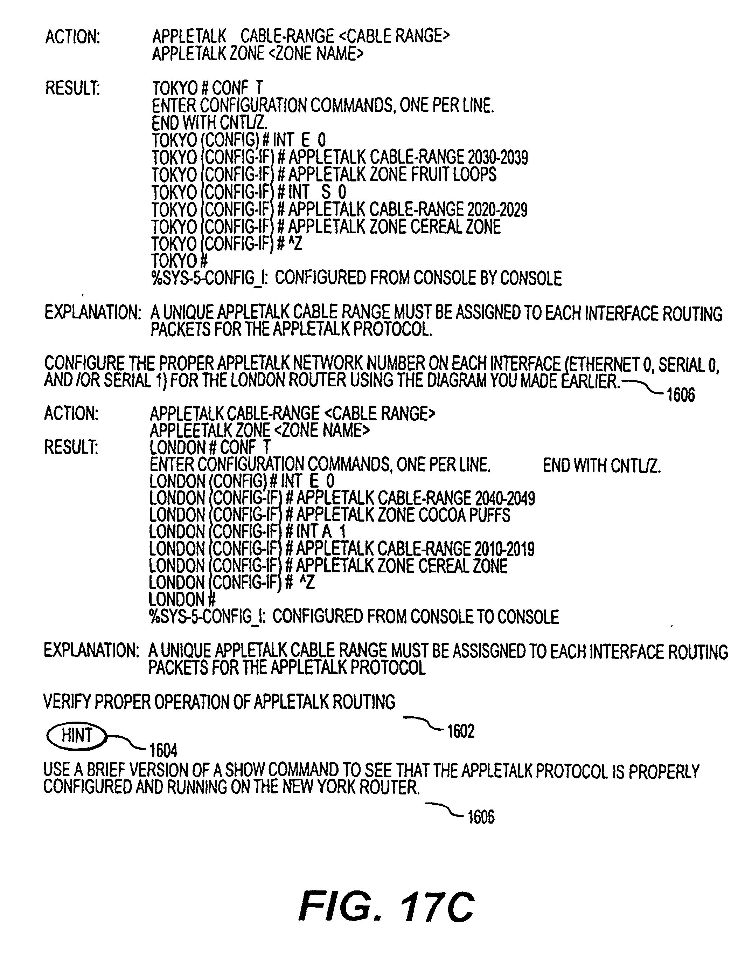

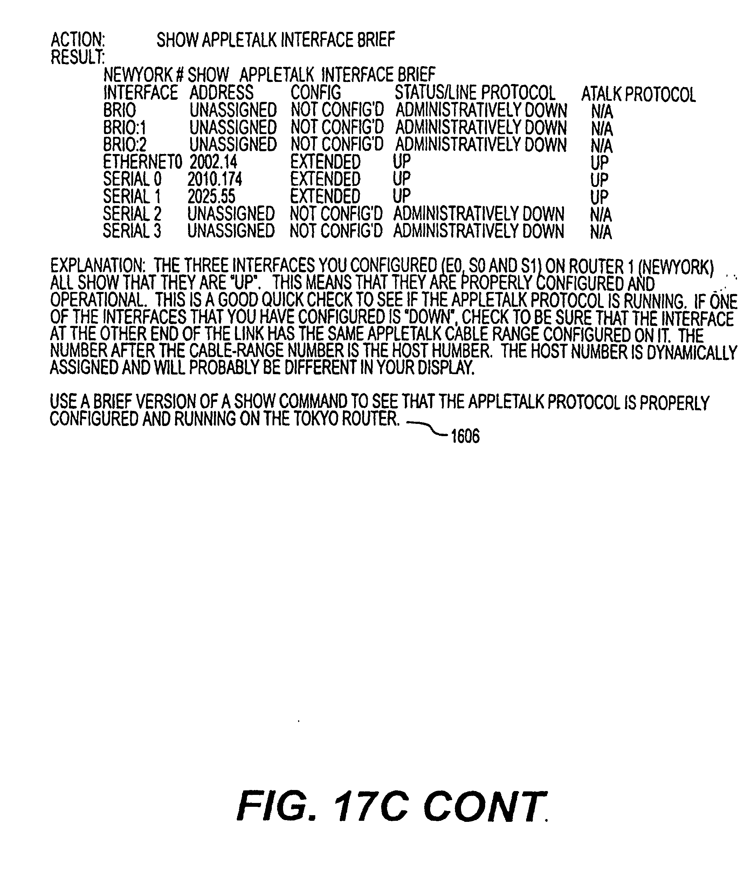

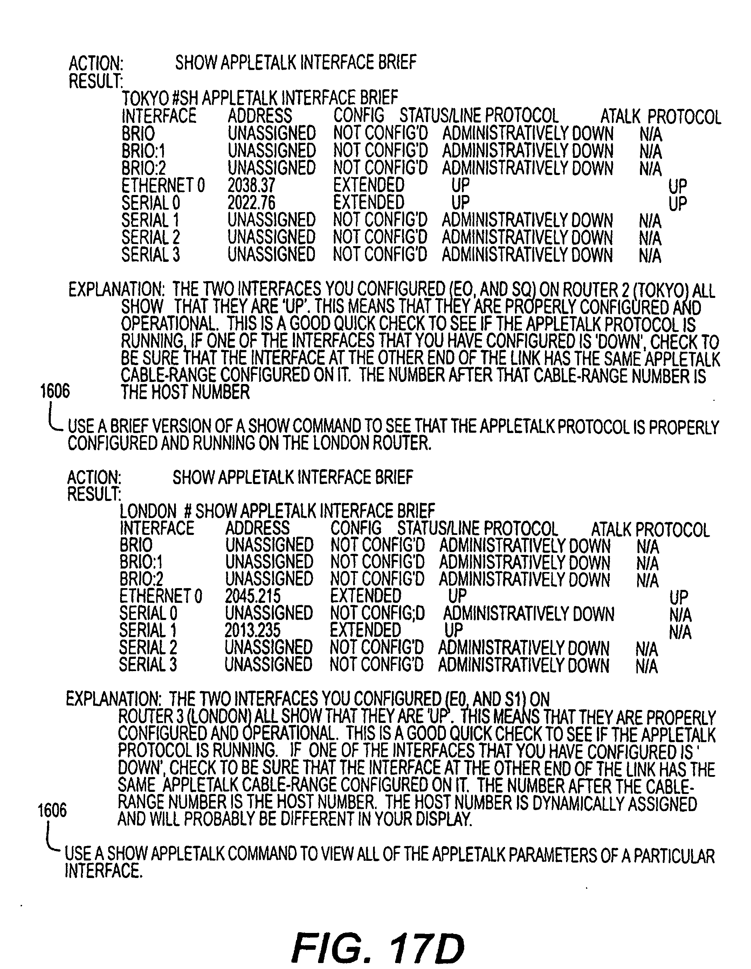

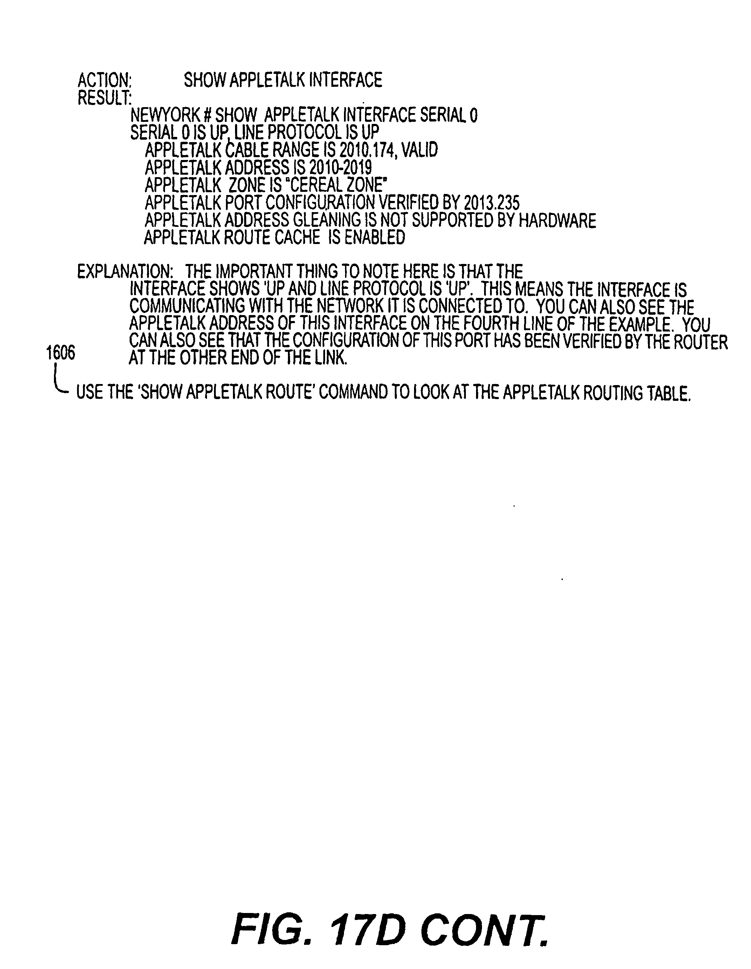

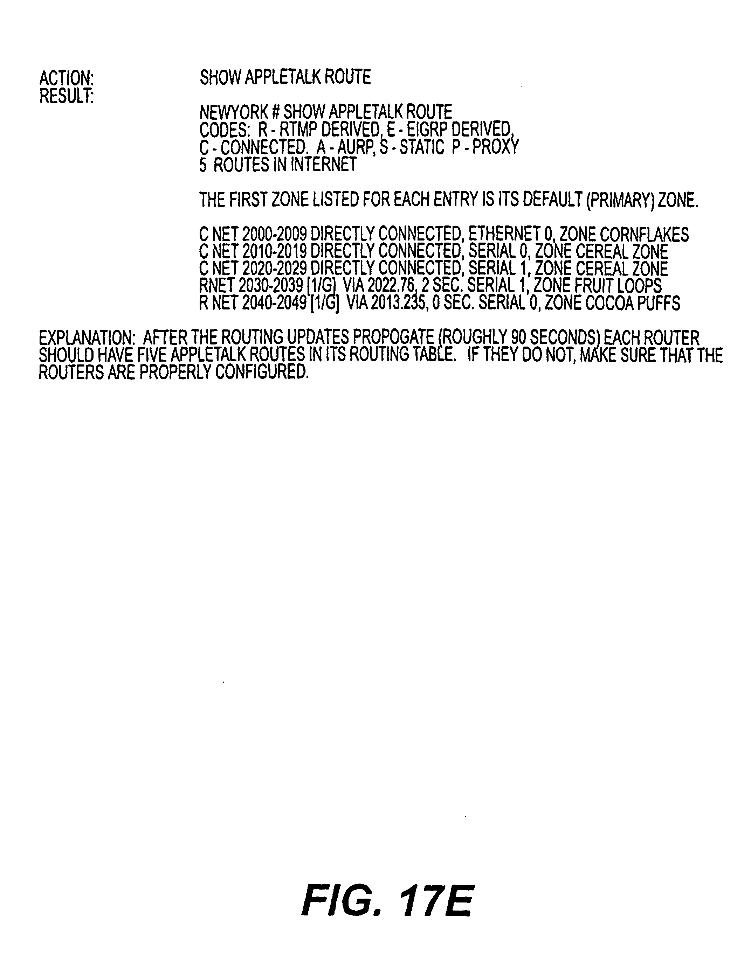

The sample solution submodule 1240 (Fig. 12) contains a subject-matter expert's solution to the module's assignment. Figure 16 illustrates a template for a page that provides a user with a sample solution. Each solution can be broken down into a series of tasks 1602. The initial display may only show each task, along with a one-line description for the task. The user may then click on a task to expose more detailed information regarding the tasks, such as hints 1604 and steps 1606. A hint 1604 is designed to assist the user in accomplishing the tasks and is useful for users who need some initial direction on how to get started with the task, but do not need detailed information on the process. A step 1606 is a one line description that may include an action to take, the result of that action, and an explanation on why the step was necessary and the result that was achieved. In another embodiment, the sample solution may show all the details of the sample solution. Figure 17 illustrates an example of an html page that provides such a sample solution.

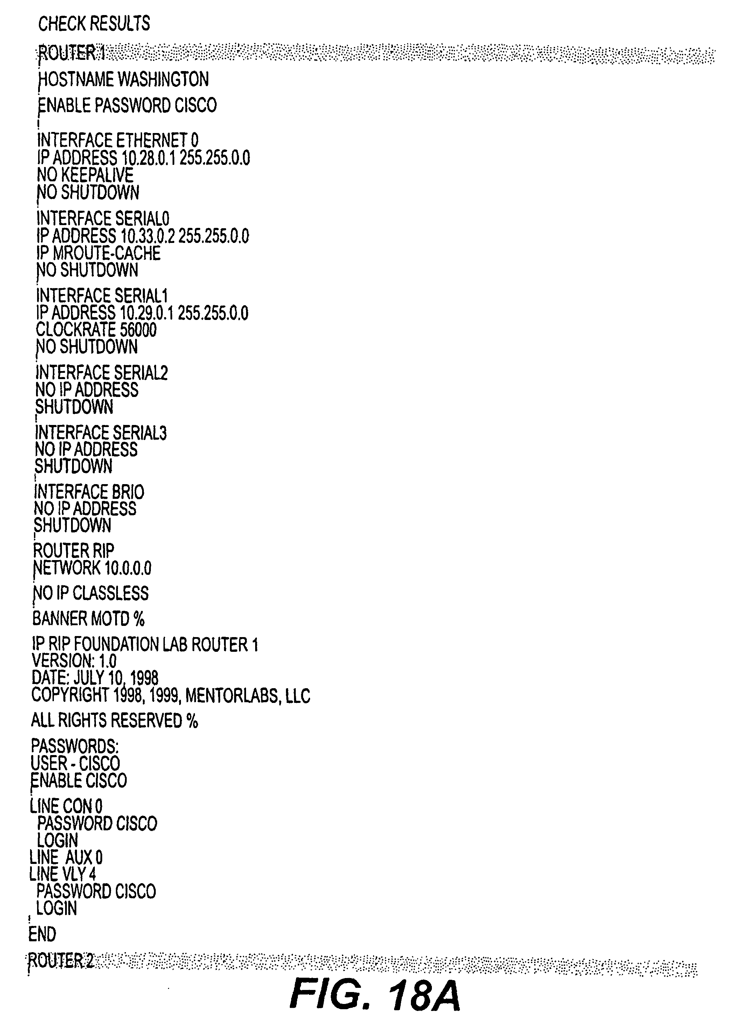

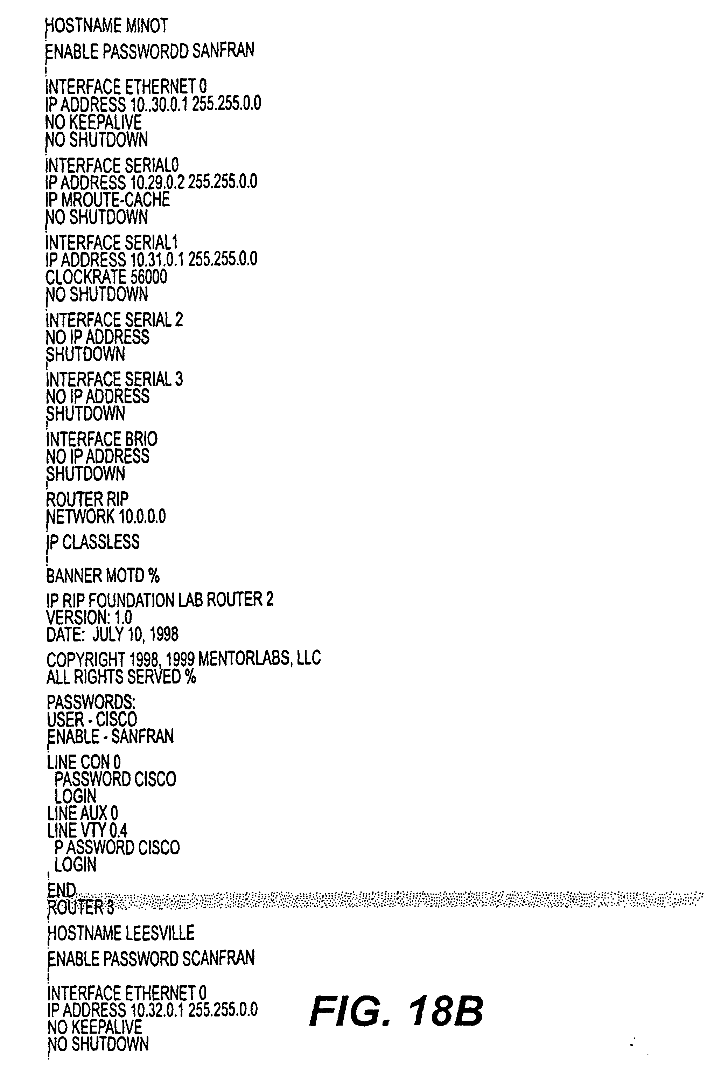

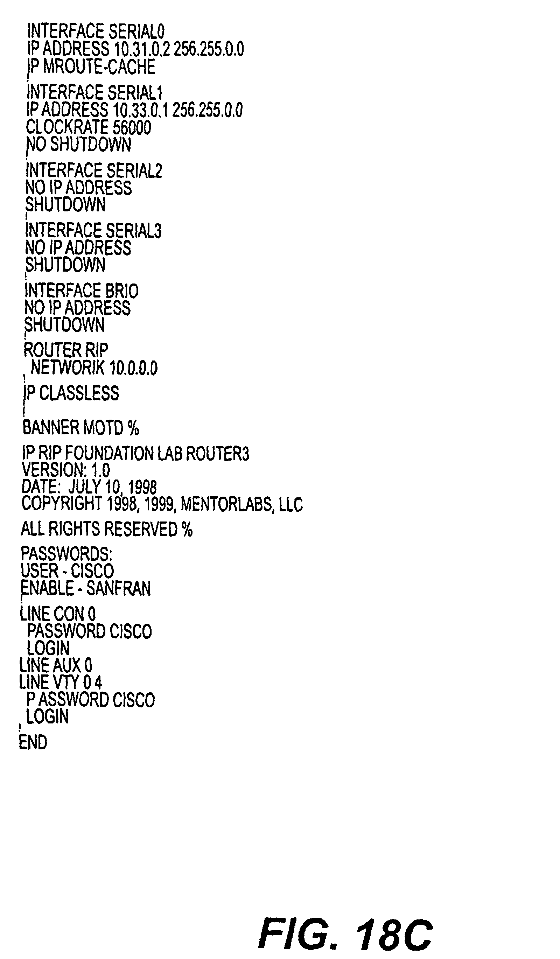

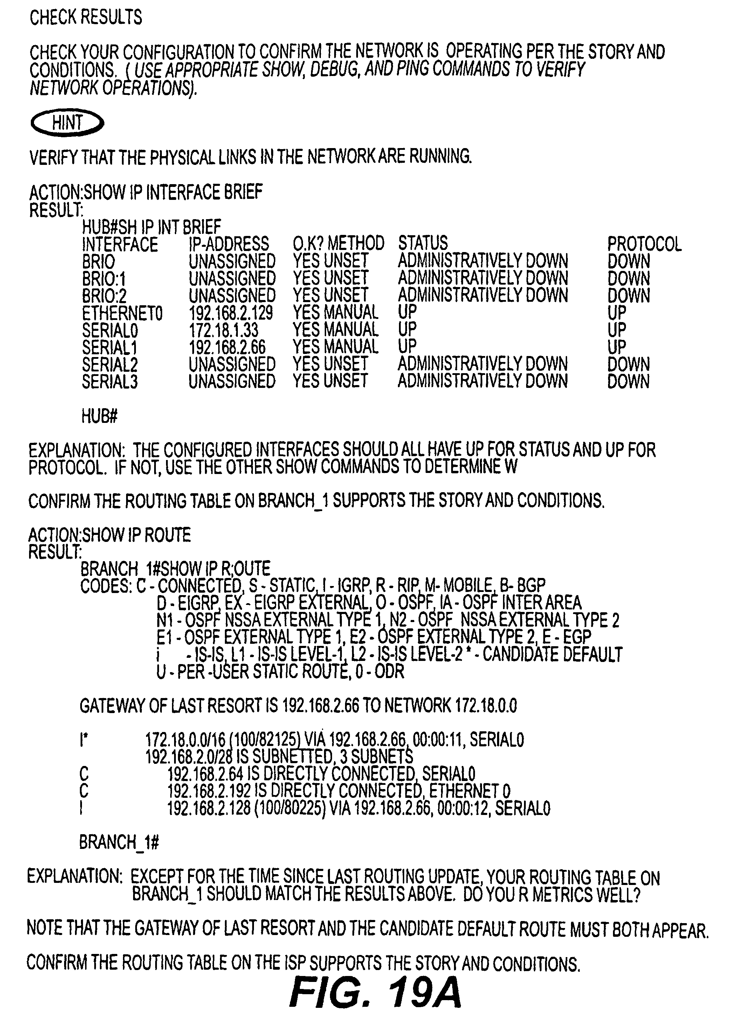

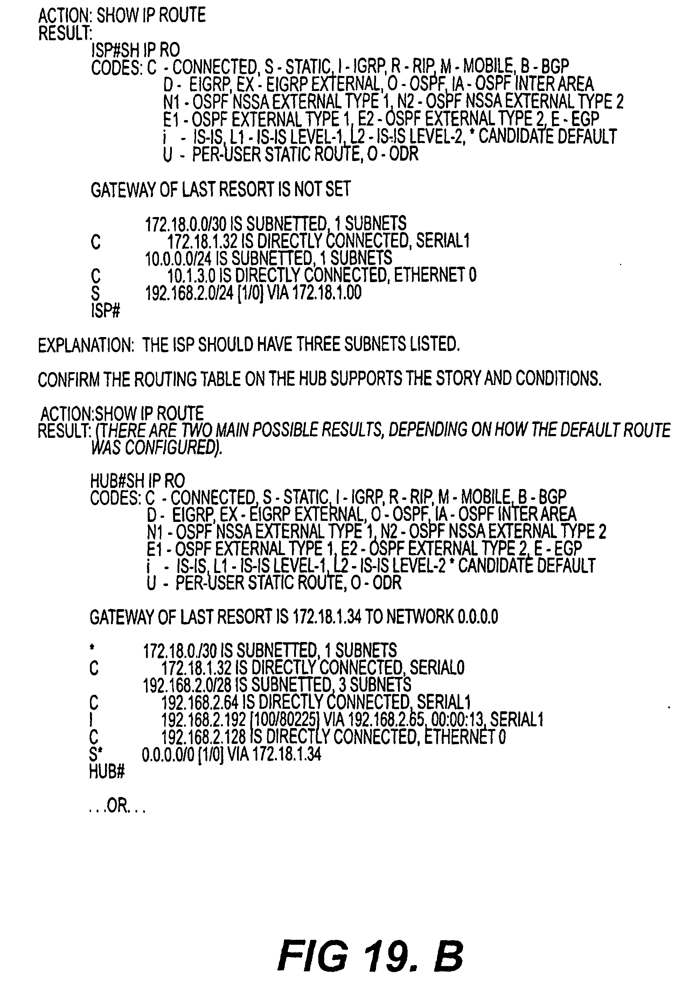

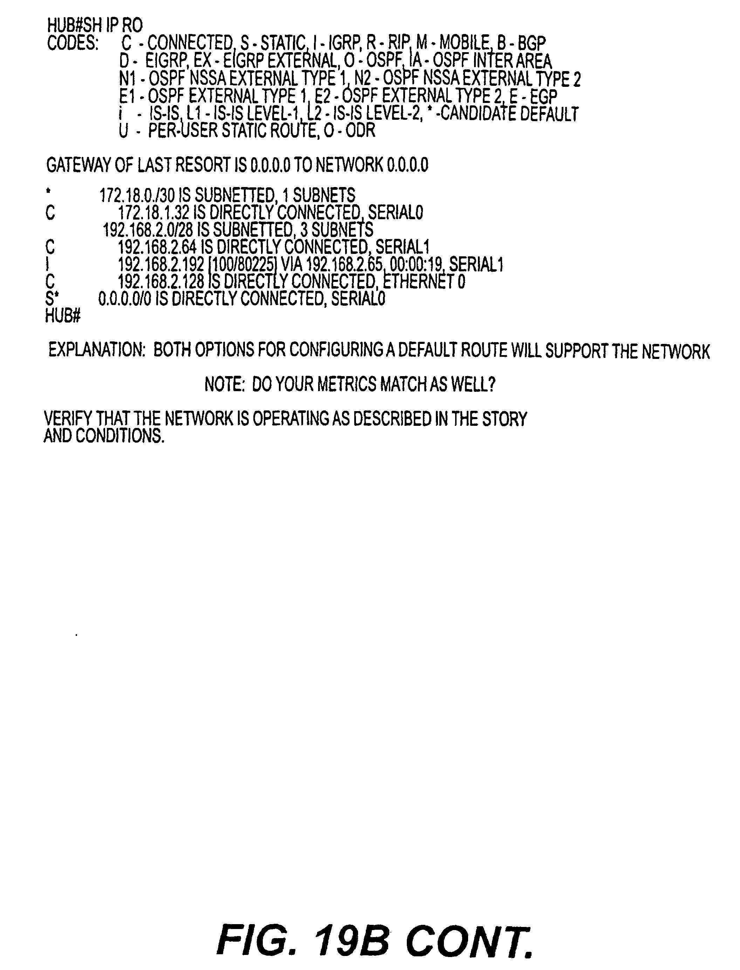

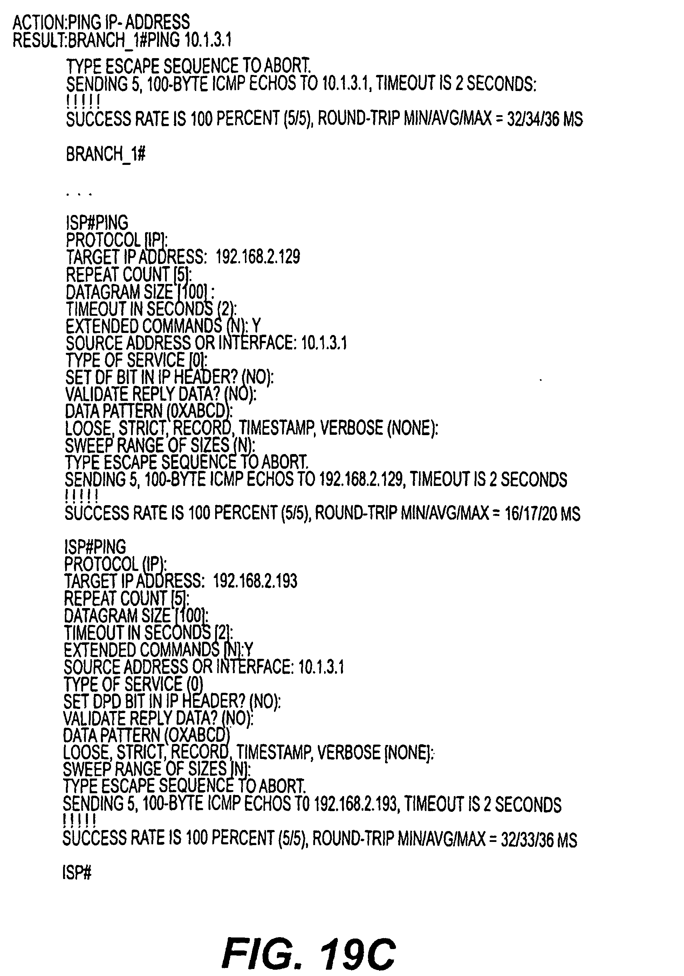

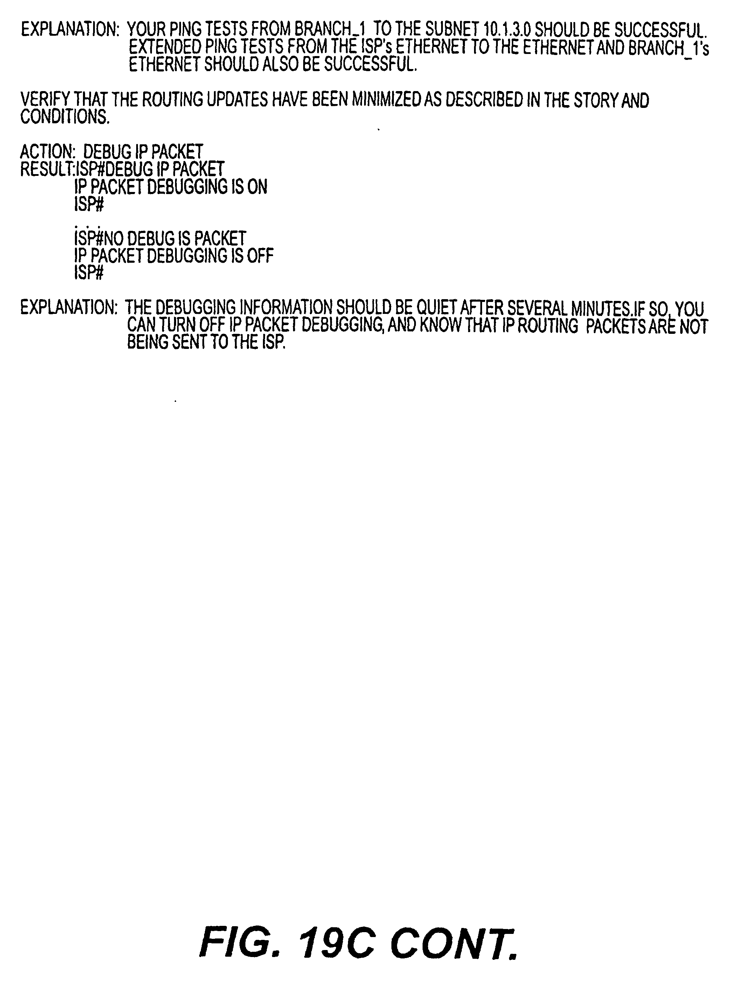

The check results submodule 1250, provides user assessment because during the course of performing a lab or course, a user may wish to check his or her final results. The user's results may be assessed in a variety of ways. For example, this assessment may be performed by examining the final configuration of the devices as compared to a final configuration produced by a subject matter expert. Figure 18 illustrates an example of a page that provides a user with one possible set of final device configurations which can be used to compare against the results obtained by the user. In another embodiment, the check results module may provide a set of steps that the user can execute to assess his or her final configuration. For example, in a Cisco router lab, the user may be told to how to examine the routing table of a specific device and look for specific outputs. Figure 19 illustrates an example of a page that provides a user with steps for checking their results.

Further, referring back to the example illustrated in Figure 4, the user may select from the graphical interface illustrated to view instructions regarding the lab 412. By clicking on this link, a page is displayed to the user regarding the general instructions for performing the lab. Also shown in the example illustrated in Figure 4 is a link to view plan 418. In this example, prior to beginning the lab, the user is presented with a series of predetermined questions designed to help the user structure his/her lab approach, thus allowing the user to plan his/her approach before beginning the lab. These questions may include, for example, questions regarding the user's plan of attack, the impact the user thinks his/her approach will have on the rest of the network and any potential trouble areas and anticipated challenges, and how he/she expects the lab to be helpful. Further, these questions may be predetermined questions or be adaptive questions that depend upon the user's answers to the questions. When the user later clicks on view plan 418, a web page is displayed to him/her that includes answers to these questions.

After a user completes a lab, in an embodiment, the user is led through a debrief question/answer section designed to reinforce the lessons taught by the lab and help the user identify ways that he/she might incorporate these skills in a production environment. The user's answers are then saved for future reference. These questions may include, for example, questions regarding how the user felt his/her plan worked out, the impact his/her approach might have had in a production environment, how he/she might change their approach, how he/she thinks his/her revised approach might work in a production environment, what he/she learned, and how the lab was helpful to him/her. Further, these questions may be predetermined questions or be adaptive questions that depend upon the user's answers to the questions.

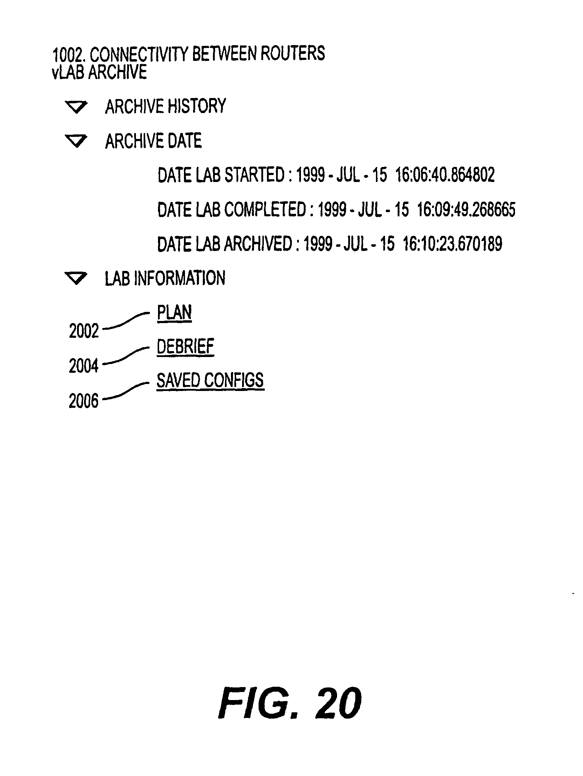

In one embodiment, after completion of a lab, the final configurations of the user devices along with other information are archived so that the user may retrieve the information and configurations at a later time. Figure 20 illustrates an example of a page that includes archived results after a user completes a lab where the user devices are Cisco type routers. In this figure, the data is organized such that a user may select the component of the data they wish to view while hiding the details of the other components. Thus, a user may quickly select the section of data they wish to view and ignore the other sections. For example, as illustrated, a user may select to individually view plan 2002, debrief 2004, or saved configurations 2006. By selecting plan 2002, a user may view, for example, information regarding their answers to the questions regarding their plan that they had previously entered. By selecting debrief 2004, a user may view information regarding their answers to questions during a debriefing session and by selecting saved configurations 2006, a user may view the final configurations of the user devices.

### Assessment

Using the above described Engine or Virtual Classroom permits assessing a user's proficiency regarding a device by assessing the user/student's control over the device.

Traditionally, students are assessed based on taking a test where they are asked questions regarding the device or control of the device. In an embodiment of the present invention, rather than simply asking a student questions regarding the device, the student is presented with a real world task regarding the control of the device. The student controls the device to perform the task. After completing the task, the student is assessed on his/her performance.

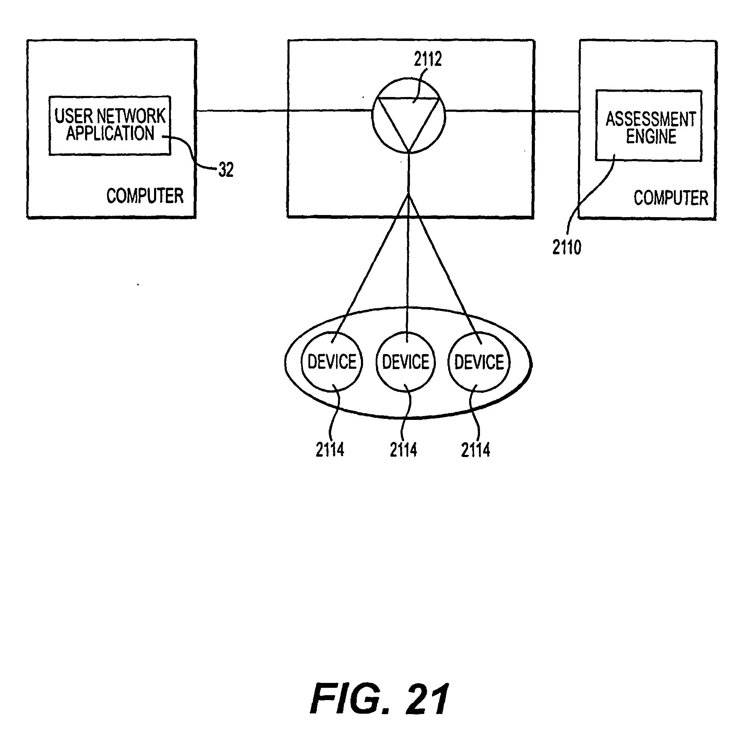

Figure 21 provides an illustration of an assessment engine 2110 that uses a wiretap 2112 to check the configuration of the user devices 2114 once the assignment is completed. As with the wiretap discussed above, various configurations may be used to implement the wiretap 2112. For example, KIBITZ may be used to implement the wiretap 2112. The assessment engine 2110 may be a piece of software running on a processor or computer. Once the assignment is completed, the assessment engine 2110 may examine the configuration of the various user devices 2114 using the wiretap 2112. The assessment engine then checks this configuration against an expected configuration. It then may generate a score. Further, the assessment engine can inform the user of how their configuration differs from the expected configuration, and the potential consequences of these differences.

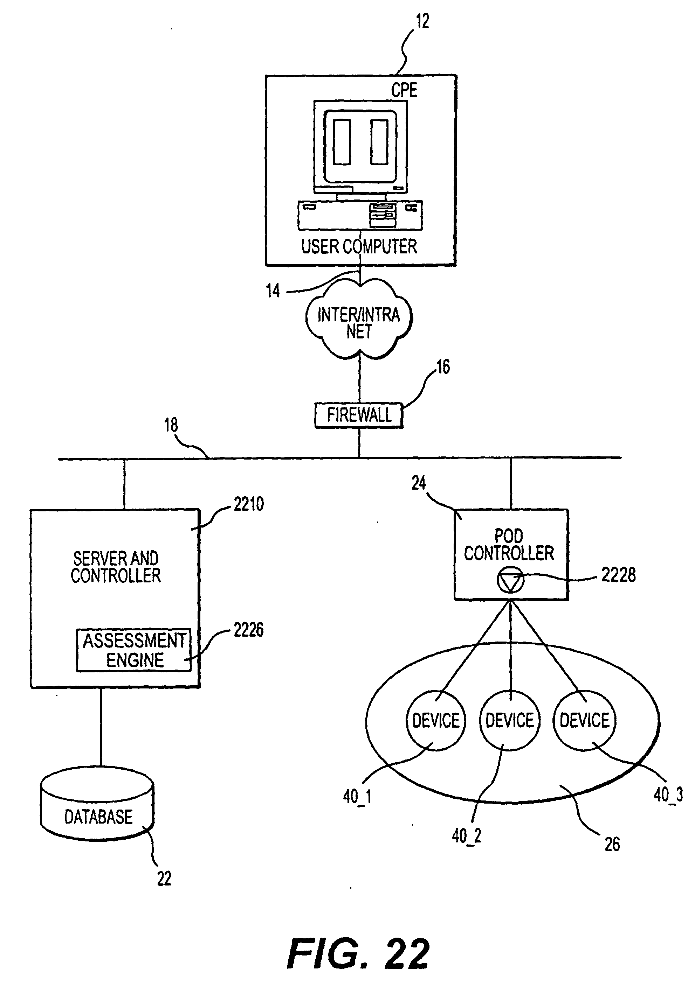

Figure 22 illustrates an embodiment in which the server and controller 2210 contains an assessment engine 2226. This assessment engine 2226 may be a piece of software running on a processor. At the completion of the assignment, the user's CPE 12 may be disconnected from the user devices. The assessment engine 2226 then connects to the various user devices 40_1 to 40_3 through the wiretap 2228 of pod controller 24. The assessment engine 2226 then examines the configurations of the user devices 40_1 to 40_3 and compares these configurations with expected configurations. The assessment engine 2226 then may generate a score for the user, and provide him/her with feedback regarding the differences between his/her configurations and the expected configurations. Further, as will be obvious to one of skill in the art, in other embodiments, the assessment engine 2226 may connect to the various devices through a direct connection.

Further, as previously discussed in one embodiment a user may be presented with a set of steps that the user can execute to assess his or her final configuration. Referring back, Figure 19 illustrates an example of a page that provides a user with steps for checking their results.

While it has been illustrated and described what is at present considered to be the preferred embodiment and methods of the present invention, it will be understood by those skilled in the art that various changes and modifications may be made, and equivalents may be substituted for elements thereof within the scope of the invention as defined by the claims.

In addition, many modifications may be made to adapt a particular element, technique or, implementation to the teachings of the present invention without departing from the central scope of the invention. Therefore, it is intended that this invention not be limited to the particular embodiment and methods disclosed herein, but that the invention includes all embodiments falling within the scope of the appended claims.

## Claims

1. A system for training users, comprising:
a device controller (24,1024) that is capable of receiving control information from at least one client computer (28,1010), the control information reflecting at least one task to be performed by one or more electronic training devices (40,1040,2114) as part of a training exercise, and the device controller (24,1024) is capable of transmitting the control information to at least one of the electronic training devices (40,1040,2114) as part of the training exercise; and
a server controller (20,1020,2210) that is capable of receiving exercise start information reflecting a request from the at least one client computer (28,1010) that a training exercise begin, determining initialization information based on the exercise start information received, and transmitting the initialization information to the device controller (24,1024) for the purpose of initializing a set of one or more electronic training devices (40,1040,2114) in accordance with the initialization information;
wherein the server controller (20,1020,2210) and the device controller (24,1024) are connected to the at least one client computer (28,1010) via a network.

2. The system of claim 1, wherein there is a firewall (16,1018) between the network and the device controller (24,1024), wherein the server controller (20,1020,2210) is further capable of transmitting access information to the firewall (16,1018) in response to receiving exercise start information so that the at least one client computer (28,1010) is permitted to access the set of one or more electronic training devices (40,1040,2114) through the firewall (16,1018).

3. The system of claim 2, wherein the network comprises an Internet or an intranet.

4. The system of claim 1, wherein the device controller (24,1024) further includes
a wiretap (902,2112,2228) for permitting a mentor computer (906) to receive information transferred from the at least one client computer (28,1010) to the one or more electronic training devices (40,1040,2114).

5. The system of claim 1, further comprising:
a second set of one or more electronic training devices (40,1040,2114) connected to the server controller (20,1020,2210) and a device controller (24,1024),
wherein an electronic training device (40,1040,2114) from the set of one or more electronic training devices (40,1040,2114) is capable of being reassigned to the second set of one or more electronic training devices (40,1040,2114).

6. The system of claim 1, further comprising:
a mentor computer (906) that is connected to the device controller (24,1024); and
wherein the device controller (24,1024) is further for receiving mentor control information reflecting at least one instruction from the mentor computer (906) regarding a task to be performed as part of the training exercise for the purposes of demonstrating at the at least one client computer (28,1010) how to perform the task, transferring the mentor control information to any electronic training device (40,1040,2114); and
wherein the set of one or more devices is further for receiving the mentor control information transferred from the device controller (24,1024), performing an operation associated with the mentor control information, providing a result of the operation to the at least one client computer (28,1010) and mentor computer (906) via the device controller (24,1024).

7. The system of claim 1, wherein the server controller (20,1020,2210) is further capable of:
transmitting to the client computer (28,1010) page information so that the client computer (28,1010) displays a page including a set of one or more icons wherein each icon corresponds to an electronic training device (40,1040,2114) in the set of one or more electronic training devices (40,1040,2114),
receiving icon selection information from the client computer (28,1010);
wherein the icon selection information is obtained by a user selecting one of the icons in the set of one or more icons displayed on the client computer (28,1010),
transmitting to the client computer (28,1010), in response to receiving the icon selection information, input window information so that the client computer (28,1010) displays an input window for receiving control information for the electronic training device (40,1040,2114) corresponding to the icon selected; and
wherein the control information is entered in the client computer (28,1010) using the input window.

8. The system of claim 1, wherein the client computer (28,1010) further includes:
a storage device; and
at least one processor connected to the storage device, the processor operative to:
receive page information from the server controller (20,1020,2210);
display a page in accordance with the page information, wherein the page includes a set of one or more icons wherein each icon corresponds to an electronic training device (40,1040,2114) in the set of one or more electronic training devices (40,1040,2114),
receive icon selection information from a user, wherein the icon selection information is obtained by a user selecting one of the icons in the set of one or more icons,
receive input window information in accordance with the icon selection information from the server controller (20,1020,2210);
display, in accordance with the received input window information, an input window for transmitting control information to the electronic training device corresponding to the icon selected;
receive control information reflecting at least one instruction regarding a task to be performed as part of a training exercise from the user via the input window; and
transmit the control information to the electronic training device (40,1040,2114) corresponding to the icon selected via the device controller (24,1024) so that the user may exercise control over the electronic training device (40,1040,2114) for the purposes of performing the training exercise.

9. The system of claim 1, wherein the server controller (20,1020,2210) is further capable of:
transmitting, upon a request from the user, a first level of help information to the at least one client computer (28,1010) regarding general information on completing the task, and
transmitting, upon a request from the user, a second level of help information to the at least one client computer (28,1010) regarding detailed information on completing the task.

10. The system of claim 9, wherein the server controller (20,1020,2210) is further capable of:
transmitting, upon a request from the user, information regarding the training exercise to the client computer (28,1010), wherein the information provided regarding the training exercise includes at least one from the group of a level of difficulty for the training exercise, an expected time for completion of the training exercise, an authorship for the training exercise, and a listing of skills associated with the training exercise.

11. The system of claim 9, wherein the server controller (20,1020,2210) is further capable of
transmitting, upon a request from the user, information regarding a context for the training exercise to the client computer (28,1010) for explaining a relationship between the training exercise and a real world scenario.

12. The system of claim 9, wherein the server controller (20,1020,2210) is further capable of:
transmitting, upon a request from the user, information regarding an approach for completing the training exercise.

13. The system of claim 9, wherein the server controller (20,1020,2210) is further capable of:
transmitting, upon a request from the user, information regarding a sample solution for completing the training exercise.

14. The system of claim 1, further comprising an assessment system connected to at least one client computer (28,1010), the assessment system operative to assess a user at the client computer (28,1010) based on the control information from the client computer (28,1010).

15. The system of claim 14, wherein the assessment system is further capable of examining a device configuration of at least one electronic training device (40,1040,2114) in the set of electronic training devices (40,1040,2114), and comparing the device configuration against an expected configuration.

16. The system of claim 14, wherein the assessment system is further capable of obtaining a state of at least one electronic training device (40,1040,2114) in the set of electronic training devices (40,1040,2114), and comparing the obtained state against an expected state.

17. The system of claim 14, wherein the assessment system is further capable of transmitting to the client computer (28,1010) information regarding differences between the device configuration and the expected configuration.

18. The system of claim 14, wherein the assessment system is further capable of transmitting to the client computer (28,1010) a grade for the training exercise.

19. A method for training users performed by a training system having at least one client computer (28,1010) that is connected to a device controller (24,1024) and a server controller (20,1020,2210) via a network, and wherein a particular user uses the at least one client computer (28,1010) to communicate with the server controller (20,1020,2210) and the device controller (24,1024), the method comprising:
receiving exercise start information at the server controller (24,1024) reflecting a request from the at least one client computer (28,1010) that a training exercise begin;
determining initialization information based on the exercise start information received at the server controller (20,1020,2210);
transmitting the initialization information from the server controller (24,1024) to the device controller (24,1024) for the purpose of initializing a set of one or more electronic training devices (40,1040,2114) in accordance with the initialization information;
receiving control information at the device controller (24,1024) reflecting at least one task to be performed by one or more electronic training devices (40,1040,2114) as part of the training exercise; and
transmitting the control information from the device controller (24,1024) to at least one electronic training device (40,1040,2114) in the set of one or more devices (40,1040,2114).

20. The method of claim 19, further comprising reassigning at least one electronic training device (40,1040,2114) in the set of one or more electronic training devices (40,1040,2114) to a second set of one or more electronic training devices (40,1040,2114).

21. The method of claim 19, wherein a mentor computer (906) is connected to the device controller (24,1024), further comprising:
receiving control information at the device controller (24,1024) reflecting at least one instruction from the mentor computer (906) regarding a task to be performed as part of the training exercise for the purposes of demonstrating at the at least one client computer (28,1010) how to perform the task;
performing an operation associated with the one or more electronic training devices (40,1040,2114) in response to the at least one instruction; and
providing a result of the operation to the mentor computer (906) and the at least one client computer (28,1010).

22. The method of claim 19, wherein there is a firewall (16,1018) between the network and the device controller (24,1024), further comprising:
transmitting access information to the firewall (16,1018) in response to receiving exercise start information so that the at least one client computer (28,1010) is permitted to access the one or more electronic training devices (40,1040,2114) through the firewall (16,1018).

23. The method of claim 19, wherein the device controller (24,1024) includes a wiretap (902,2112,2228), further comprising:
receiving control information from the at least one client computer (28,1010) at the wiretap (902,2112,2228); and
transferring the control information received at the wiretap (902,2112,2228) to a mentor computer (906).

24. The method of claim 19, further comprising:
transmitting from the server controller (20,1020,2210) to the client computer (28,1010) page information so that the client computer (28,1010) displays a page including a set of one or more icons wherein each icon corresponds to an electronic training device (40,1040,2114) in the set of one or more electronic training devices (40,1040,2114);
receiving at the server controller (20,1020,2210) icon selection information from the client computer (28,1010) in response to a user selecting one of the icons in the set of one or more icons displayed on the client computer (28,1010);
transmitting from the server controller (20,1020,2210) to the client computer (28,1010), in response to receiving the icon selection information, input window information so that the client computer (28,1010) displays an input window for receiving control information for the electronic training device corresponding to the icon selected, wherein the control information is entered at the client computer (28,1010) using the input window; and
transmitting the control information from the device controller (24,1024) to the electronic training device (40,1040,2114) corresponding to the icon selected so that the user may exercise control over the electronic training device (40,1040,2114).

25. The method of claim 19, further comprising:
receiving page information at the at least one client computer (28,1010) from the server controller (20,1020,2210);
displaying a page at the at least one client computer (28,1010) in accordance with the page information, wherein the page includes a set of one or more icons wherein each icon corresponds to an electronic training device (40,1040,2114) in the set of one or more electronic training devices (40,1040,2114);
receiving icon selection information at the device controller (24,1024) from the at least one client computer (28,1010), wherein the icon selection information is obtained by a user at the at least one client computer (28,1010) selecting one of the icons in the set of one or more icons;
transmitting the icon selection information from the device controller (24,1024) to the server controller (20,1020,2210);
receiving input window information at the at least one client computer (28,1010) from the server controller (20,1020,2210), the input window information corresponding to the icon selection information;
displaying at the at least one client computer (28,1010), in response to receiving the input window information, an input window for transmitting control information to the electronic training device (40,1040,2114) corresponding to the icon selection information;
receiving at the device controller (24,1024) the control information reflecting at least one instruction regarding the task to be performed as part of the training exercise from the user via the input window, and
transmitting the control information from the device controller (24,1024) to at least one of the electronic training devices (40,1040,2114) in the set of one or more electronic training devices (40,1040,2114) so that the user may exercise control over the electronic training device (40,1040,2114).

26. The system of any one of claims 7 and 8 or the method of any one of claims 24 and 25, wherein the page further includes a set of overhead buttons, each corresponding to an overhead function operable on one or more of the set of one or more electronic training devices (40,1040,2114), further comprising:
receiving overhead button selection information from a user in response to a user selecting one of the overhead buttons; wherein overhead function information is transmitted to the one or more electronic training devices (40,1040,2114) in response to the selecting of the overhead button; and
wherein the overhead button includes at least one function from the group of resetting one or more of the devices in the set of one or more electronic training devices (40,1040,2114), saving a configuration of one or more of devices electronic training in the set of one or more electronic training devices (40,1040,2114), and loading a configuration into one or more of the electronic training devices (40,1040,2114) in the set of one or more electronic training devices (40,1040,2114).

27. The system of any one of claims 7 and 8 or the method of any one of claims 24 and 25, wherein the page further includes a set of navigational buttons, each corresponding to a page associated with the training exercise, further comprising:
receiving navigational button selection information in response to a user selecting one of the set of navigational buttons; and
displaying a new page associated with the navigational button selected in response to receiving the navigational button selection information.

28. The system or the method of claim 27, wherein the new page associated with the navigational button includes information regarding instructions for performing the training exercise.

29. The system or the method of claim 27, wherein the new page associated with the navigational button includes information regarding a scenario and assignment for the training exercise.

30. The system or the method of claim 27, wherein the new page associated with the navigational button includes information regarding mentoring.

31. The system or the method of claim 27, wherein the new page associated with the navigational button includes information regarding a suggested approach for the training exercise.

32. The system or the method of claim 27, wherein the new page associated with the navigational button includes information regarding a sample solution for the training exercise.

33. The system or the method of claim 27, wherein the new page associated with the navigational button includes information regarding a plan for the training exercise.

34. The system or the method of claim 27, wherein the new page associated with the navigational button includes information regarding results associated with the training exercise.

35. The method of claim 19, further comprising:
transmitting, upon a request from the user, a first level of help information to the client computer (28,1010) from the server controller (20,1020,2210) regarding general information on completing the task; and
transmitting, upon a request from the user, a second level of help information to the client computer (28,1010) from the server controller (20,1020,2210) regarding detailed information on completing the task.

36. The method of claim 35, further comprising transmitting, upon a request from the user, information regarding the training exercise to the client computer (28,1010) from the server controller (20,1020,2210), wherein the information provided regarding the training exercise includes at least one from the group of a level of difficulty for the training exercise, an expected time for completion of the training exercise, an authorship for the training exercise, and a listing of skills associated with the training exercise.

37. The method of claim 35, further comprising transmitting, upon a request from the user, information regarding a context for the training exercise to the client computer (28,1010) from the server controller (20,1020,2210) for describing a relationship between the training exercise and a real world scenario.

38. The method of claim 35, further comprising transmitting, upon a request from the user, information regarding an approach for completing the training exercise to the client computer (28,1010) from the server controller (20,1020,2210).

39. The method of claim 35, further comprising transmitting, upon request from the user, information regarding a sample solution for completing the training exercise to the client computer (28,1010) from the server controller (20,1020,2210).

40. The method of claim 19, further comprising assessing the user based on the control information from the client computer (28,1010).

41. The method of claim 40, further comprising:
examining a device configuration for at least one electronic training device (40,1040,2114) in the set of electronic training devices (40,1040,2114); and
comparing the device configuration against an expected configuration.

42. The method of claim 40, further comprising transmitting to the client computer (28,1010) information regarding differences between the device configuration and the expected configuration.

43. The method of claim 40, further comprising:
obtaining a state for at least one electronic training device (40,1040,2114) in the set of electronic training devices (40,1040,2114); and
comparing the obtained state against an expected state.

44. The method of claim 40, further comprising transmitting to the client computer (28,1010) a grade for the training exercise.

45. The system of claim 1 or the method of claim 19, wherein at least one of the set of electronic training devices (40,1040,2114) is a router.

46. The system of claim 1 or the method of claim 19, wherein at least one of the set of electronic training devices (40,1040,2114) is a switch.

47. The system of claim 1 or the method of claim 19, wherein at least one of the set of electronic training devices (40,1040,2114) is a computer.

## Patentansprüche

1. Ein System zur Ausbildung von Benutzern, das umfasst:
einen Geräte-Controller (24, 1024), der fähig ist, Kontroll-Informationen von mindestens einem Client-Computer (28, 1010) zu empfangen, wobei die Kontroll-Informationen zumindest eine durch ein oder mehrere elektronische Ausbildungs-Geräte (40, 1040, 2114) als Teil einer Ausbildungs-Übung auszuführende Aufgabe widerspiegeln, und der Geräte-Controller (24, 1024) ist fähig, die Kontroll-Informationen zu mindestens einem der elektronischen Ausbildungs-Geräte (40, 1040, 2114) als Teil einer Ausbildungs-Übung zu übertragen; und
einen Server-Controller (20, 1020, 2210), der fähig ist, Übungs-Start-Informationen zu empfangen, die eine Anforderung von mindestens einem Client-Computer (28, 1010) widerspiegeln, dass die Ausbildungs-Übung beginnt, wobei die Initialisierungs-Informationen bestimmt werden, die auf den empfangenen Übungs-Start-Informationen basieren und die Initialisierungs-Informationen zu dem Geräte-Controller (24, 1024) übertragen werden, zu dem Zweck der Initialisierung eines Satzes aus einem oder mehreren elektronischen Ausbildungs-Geräten (40, 1040, 2114) in Übereinstimmung mit den Initialisierungs-Informationen;
wobei der Server-Controller (20, 1020, 2210) und der Geräte-Controller (24, 1024) mit mindestens einem Client-Computer (28, 1010) über ein Netzwerk verbunden sind.

2. Das System nach Anspruch 1, wobei es zwischen dem Netzwerk und dem Geräte-Controller (24, 1024) eine Firewall (16, 1018) gibt, wobei der Server-Controller (20, 1020, 2210) ferner fähig ist, Zugangs-Informationen zu der Firewall (16, 1018) in Erwiderung auf den Empfang der Übungs-Start-Informationen zu übertragen, so dass es mindestens einem Client-Computer (28, 1010) gestattet ist, auf den Satz von einem oder mehreren elektronischen Ausbildungs-Geräten (40, 1040, 2114) über die Firewall (16, 1018) zuzugreifen.

3. Das System nach Anspruch 2, wobei das Netzwerk ein Internet oder ein Intranet umfasst.

4. Das System nach Anspruch 1, wobei der Geräte-Controller (24, 1024) ferner beinhaltet
ein Wiretap (902, 2112, 2228), um einem Mentor-Computer (906) zu gestatten, Informationen zu empfangen, die von mindestens einem Client-Computer (28, 1010) zu einem oder mehreren elektronischen Ausbildungs-Geräten (40, 1040, 2114) übertragen werden.

5. Das System nach Anspruch 1, das ferner umfasst:
einen zweiten Satz von einem oder mehreren elektronischen Ausbildungs-Geräten (40, 1040, 2114), die mit dem Server-Controller (20, 1020, 2210) und einem Geräte-Controller (24, 1024) verbunden sind, wobei ein elektronisches Ausbildungs-Gerät (40, 1040, 2114) aus dem Satz von einem oder mehreren elektronischen Ausbildungs-Geräten (40, 1040, 2114) fähig ist, einem zweiten Satz von einem oder mehreren elektronischen Ausbildungs-Geräten (40, 1040, 2114) zugewiesen zu werden.

6. Das System nach Anspruch 1, das ferner umfasst:
einen Mentor-Computer (906), der mit dem Geräte-Controller (24, 1024) verbunden ist; und
wobei der Geräte-Controller (24, 1024) ferner für den Empfang von Mentor-Kontroll-Informationen da ist, die zumindest eine Anweisung von dem Mentor-Computer (906) hinsichtlich der als Teil der Ausbildungs-Übung auszuführenden Aufgabe widerspiegeln, zu dem Zweck, zumindest einem Client-Computer (28, 1010) vorzuführen, wie die Aufgabe auszuführen ist, wobei die Mentor-Kontroll-Informationen zu irgendeinem elektronischen Ausbildungs-Gerät (40, 1040, 2114) übertragen werden; und
wobei der Satz von einem oder mehreren Geräten ferner für den Empfang der Mentor-Kontroll-Informationen da ist, die von dem Geräte-Controller (24, 1024) übertragen wird, der eine mit der Mentor-Kontroll-Informationen verknüpfte Operation ausführt, wobei das Ergebnis der Operation mindestens einem Client-Computer (28, 1010) und Mentor-Computer (906) über den Geräte-Controller (24, 1024) zur Verfügung gestellt wird.

7. Das System nach Anspruch 1, wobei der Server-Controller (20, 1020, 2210) ferner fähig ist:
dem Client-Computer (28, 1010) Seiten-Informationen zu übertragen, so dass der Client-Computer (28, 1010) eine Seite anzeigt, die einen Satz von einem oder mehreren Symbolen umfasst, wobei jedes Symbol einem elektronischen Ausbildungs-Gerät (40, 1040, 2114) aus dem Satz von einem oder mehreren elektronischen Ausbildungsgeräten (40, 1040, 2114) entspricht,
von dem Client-Computer (28, 1010) Symbol-Auswahl-Informationen zu empfangen, wobei die Symbol-Auswahl-Informationen von einem Benutzer erlangt werden, indem er eines der Symbole aus dem Satz von einem oder mehreren auf dem Client-Computer (28, 1010) angezeigten Symbolen auswählt,
an den Client-Computer (28, 1010) in Erwiderung auf den Empfang der Symbol-Auswahl-Informationen Eingabe-Fenster-Informationen zu übertragen, so dass der Client-Computer (28, 1010) ein Eingabe-Fenster anzeigt, um Kontroll-Informationen für das elektronische Ausbildungs-Gerät (40, 1040, 2114) entsprechend des ausgewählten Symbols zu empfangen; und
wobei die Kontroll-Informationen in den Client-Computer (28, 1010) durch Benutzung des Eingabe-Fensters eingegeben werden.

8. Das System nach Anspruch 1, wobei der Client-Computer (28, 1010) ferner beinhaltet:
ein Speichergerät; und
mindestens einen Prozessor, der mit dem Speichergerät verbunden ist, der Prozessor ist funktionsfähig für:
Seiten-Informationen von dem Server-Controller (20, 1020, 2210) zu empfangen;
eine Seite in Übereinstimmung mit den Seiten-Informationen anzuzeigen, wobei die Seite einen Satz von einem oder mehreren Symbolen beinhaltet, wobei jedes Symbol einem elektronischen Ausbildungs-Gerät (40, 1040, 2114) aus dem Satz von einem oder mehreren elektronischen Ausbildungs-Geräten (40, 1040, 2114) entspricht,
Symbol-Auswahl-Informationen von einem Benutzer zu empfangen, wobei die Symbol-Auswahl-Informationen vom Benutzer erlangt werden, indem er eines oder mehrere Symbole aus dem Satz von einem oder mehreren Symbolen auswählt,
Eingabe-Fenster-Informationen in Übereinstimmung mit den Symbol-Auswahl-Informationen von dem Server-Controller (20, 1020, 2210) zu empfangen;
in Übereinstimmung mit den empfangenen Eingabe-Fenster-Informationen ein Eingabe-Fenster anzuzeigen, um die Kontroll-Informationen entsprechend des ausgewählten Symbols zu dem elektronischen Ausbildungs-Gerät zu übertragen;
die Kontroll-Informationen zu empfangen, die zumindest eine Anweisung hinsichtlich der vom Benutzer über das Eingabe-Fenster als Teil der Ausbildungs-Übung auszuführende Aufgabe, widerspiegeln; und
die Kontroll-Informationen zu dem elektronischen Ausbildungs-Gerät (40, 1040, 2114) zu übertragen, das dem über den Geräte-Controller (24, 1024) ausgewählten Symbol entspricht, so dass der Benutzer die Kontrolle über das elektronische Ausbildungs-Gerät (40, 1040, 2114) zu dem Zweck der Durchführung der Ausbildungs-Übung ausüben kann.

9. Das System nach Anspruch 1, wobei der Server-Controller (20, 1020, 2210) ferner fähig ist:
auf Anforderung des Benutzers eine erste Stufe der Hilfe-Informationen hinsichtlich von allgemeinen Informationen zur Erledigung der Aufgabe zu mindestens einem Client-Computer (28, 1010) zu übertragen, und
auf Anforderung des Benutzers eine zweite Stufe der Hilfe-Informationen hinsichtlich von detaillierten Informationen zur Erledigung der Aufgabe zu mindestens einem Client-Computer (28, 1010) zu übertragen.

10. Das System nach Anspruch 9, wobei der Server-Controller (20, 1020, 2210) ferner fähig ist:
auf Anforderung des Benutzers Informationen hinsichtlich der Ausbildungs-Übung zu dem Client-Computer (28, 1010) zu übertragen, wobei die hinsichtlich der Ausbildungs-Übung zur Verfügung gestellten Informationen zumindest eine aus der Gruppe der Schwierigkeitsstufen für die Ausbildungs-Übung beinhalten, eine erwartete Zeit zur Erledigung der Ausbildungs-Übung, Urheberschaft für die Ausbildungs-Übung und eine Auflistung der mit der Ausbildungs-Übung verbundenen Fähigkeiten.

11. Das System nach Anspruch 9, wobei der Server-Controller (20, 1020, 2210) ferner fähig ist:
auf Anforderung des Benutzers Informationen hinsichtlich eines Kontexts für die Ausbildungs-Übung zu dem Client-Computer (28, 1010) zu übertragen, zur Erläuterung der Beziehung zwischen der Ausbildungs-Übung und einem Wirklichkeits-Szenarium.

12. Das System nach Anspruch 9, wobei der Server-Controller (20, 1020, 2210) ferner fähig ist:
auf Anforderung des Benutzers Informationen hinsichtlich einer Annäherung zur Erledigung der Ausbildungs-Übung zu übertragen.

13. Das System nach Anspruch 9, wobei der Server-Controller (20, 1020, 2210) ferner fähig ist:
auf Anforderung des Benutzers Informationen hinsichtlich einer Musterlösung zur Erledigung der Ausbildungs-Übung zu übertragen.

14. Das System nach Anspruch 1, das ferner ein Beurteilungs-System umfasst, das mindestens mit einem Client-Computer (28, 1010) verbunden ist, das Beurteilungs-System ist betriebsbereit, um einen Benutzer an einem Client-Computer (28, 1010) auf der Grundlage der Kontroll-Informationen von dem Client-Computer (28, 1010) zu beurteilen.

15. Das System nach Anspruch 14, wobei das Beurteilungs-System ferner zur Untersuchung einer Geräte-Konfiguration von mindestens einem elektronischen Ausbildungs-Gerät (40, 1040, 2114) aus dem Satz der elektronischen Ausbildungs-Geräte (40, 1040, 2114) und zum Vergleichen der Geräte-Konfiguration mit der erwarteten Konfiguration fähig ist.

16. Das System nach Anspruch 14, wobei das Beurteilungs-System ferner fähig ist, den Status von mindestens einem elektronischen Ausbildungs-Gerät (40, 1040, 2114) aus dem Satz der elektronischen Ausbildungs-Geräte (40, 1040, 2114) zu erlangen und den erlangten Status mit dem erwarteten Status zu vergleichen.

17. Das System nach Anspruch 14, wobei das Beurteilungs-System ferner fähig ist, Informationen hinsichtlich der Abweichungen zwischen der Geräte-Konfiguration und der erwarteten Konfiguration zu dem Client-Computer (28, 1010) zu übertragen.

18. Das System nach Anspruch 14, wobei das Beurteilungs-System ferner fähig ist, eine Note für die Ausbildungs-Übung zu dem Client-Computer (28, 1010) zu übertragen.

19. Eine Methode zur Ausbildung von Benutzern, die durch ein Ausbildungs-System ausgeführt wird, das mindestens einen Client-Computer (28, 1010) besitzt, der über ein Netzwerk mit einem Geräte-Controller (24, 1024) und mit einem Server-Controller (20, 1020, 2210) verbunden ist, und wobei ein einzelner Benutzer mindestens einen Client-Computer (28, 1010) benutzt, um mit dem Server Controller (20, 1020, 2210) und dem Geräte-Controller (24, 1024) zu kommunizieren, wobei die Methode umfasst:
Empfangen von Übungs-Start-Informationen beim Server-Controller (24, 1024), die eine Anforderung von mindestens einem Computer-Client (28, 1010) widerspiegeln, dass eine Ausbildungs-Übung beginnt;
Bestimmen der Initialisierungs-Informationen, die auf der bei dem Server-Controller (20, 1020, 2210) empfangenen Übungs-Start-Information basieren;
Übertragen der Initialisierungs-Informationen von dem Server-Controller (24, 1024) zu dem Geräte-Controller (24, 1024), zu dem Zweck der Initialisierung eines Satz von einem oder mehreren elektronischen Ausbildungs-Geräten (40, 1040, 2114) in Übereinstimmung mit den Initialisierungs-Informationen;
Empfangen von Kontroll-Informationen bei dem Geräte-Controller (24, 1024), die mindestens eine von einem oder mehreren elektronischen Ausbildungs-Geräten (40, 1040, 2114) als Teil der Ausbildungs-Übung auszuführende Aufgabe widerspiegeln; und
Übertragen der Kontroll-Informationen von dem Geräte-Controller (24, 1024) zu mindestens einem elektronischen Ausbildungs-Gerät (40, 1040, 2114) aus dem Satz von einem oder mehreren Geräten (40, 1040, 2114).

20. Die Methode nach Anspruch 19, die ferner die Zuweisung mindestens eines elektronischen Ausbildungs-Geräts (40, 1040, 2114) aus dem Satz von einem oder mehreren elektronischen Ausbildungs-Geräten (40, 1040, 2114) zu einem zweiten Satz von einem oder mehreren elektronischen Ausbildungs-Geräten (40, 1040, 2114) umfasst.

21. Die Methode nach Anspruch 19, wobei ein Mentor-Computer (906) mit dem Geräte-Controller (24, 1024) verbunden ist, die ferner umfasst:
Empfangen der Kontroll-Informationen bei dem Geräte-Controller (24, 1024), die zumindest eine Anweisung von dem Mentor-Computer (906) hinsichtlich der als Teil der Ausbildungs-Übung auszuführenden Aufgabe widerspiegeln, zu dem Zweck, zumindest einem Client-Computer (28, 1010) vorzuführen, wie die Aufgabe auszuführen ist;
Ausführung einer mit dem einen oder mehreren elektronischen Ausbildungs-Geräten (40, 1040, 2114) verknüpften Operation, in Erwiderung auf mindestens eine Anweisung; und
Zurverfügungstellen des Ergebnisses der Operation für den Mentor-Computer (906) und bei dem mindestens einen Client-Computer (28, 1010).

22. Die Methode nach Anspruch 19, wobei es zwischen dem Netzwerk und dem Geräte-Controller (24, 1024) eine Firewall (16, 1018) gibt, die ferner umfasst:
Übertragen der Zugangs-Informationen zu der Firewall (16, 1018) in Erwiderung auf den Empfang von Übungs-Start-Informationen, so dass es mindestens einem Client-Computer (28, 1010) gestattet wird, auf ein oder mehrere elektronische Ausbildungs-Geräte (40, 1040, 2114) über die Firewall (16, 1018) zuzugreifen.

23. Eine Methode nach Anspruch 19, wobei der Geräte-Controller (24, 1024) ein Wiretap (902, 2112, 2228) umfasst, die ferner umfasst:
Empfangen von Kontroll-Infonnationen von mindestens einem Client-Computer (28, 1010) bei dem Wiretap (902, 2112, 2228); und
Übertragen der bei dem Wiretap (902, 2112, 2228) empfangenen Kontroll-Informationen zu einem Mentor-Computer (906).

24. Eine Methode nach Anspruch 19, die ferner umfasst:
Übertragen von Seiten-Informationen von dem Server-Controller (20, 1020, 2210) zu dem Client-Computer (28, 1010), so dass der Client-Computer (28, 1010) eine Seite anzeigt, die einen Satz von einem oder mehreren Symbolen umfasst, wobei jedes Symbol einem elektronischen Ausbildungs-Gerät (40, 1040, 2114) aus dem Satz von einem oder mehreren elektronischen Ausbildungsgeräten (40, 1040, 2114) entspricht;
Empfangen von Symbol-Auswahl-Informationen von dem Client-Computer (28, 1010) bei dem Server-Controller (20, 1020, 2210) in Erwiderung auf die Benutzer-Auswahl eines der Symbole aus dem Satz von einem oder mehreren auf dem Client-Computer (28, 1010) angezeigten Symbolen;
Übertragen von Eingabe-Fenster-Informationen von dem Server-Controller (20, 1020, 2210) zu dem Client-Computer (28, 1010) in Erwiderung auf den Empfang der Symbol-Auswahl-Informationen, so dass der Client-Computer (28, 1010) ein Eingabe-Fenster anzeigt, um Kontroll-Informationen für das elektronische Ausbildungs-Gerät entsprechend des ausgewählten Symbols zu empfangen, wobei die Kontroll-Informationen in den Client-Computer (28, 1010) durch Benutzung des Eingabe-Fensters eingegeben werden; und
Übertragen der Kontroll-Informationen von dem Geräte-Controller (24, 1024) zu dem elektronischen Ausbildungs-Gerät (40, 1040, 2114), entsprechend des ausgewählten Symbols, so dass der Benutzer Kontrolle über das elektronische Ausbildungs-Gerät (40, 1040, 2114) ausüben kann.

25. Die Methode nach Anspruch 19, die ferner umfasst:
Empfangen von Seiten-Informationen von dem Server-Controller (20, 1020, 2210) bei mindestens einem Client-Computer (28, 1010);
Anzeigen einer Seite bei mindestens einem Client-Computer (28, 1010) in Übereinstimmung mit den Seiten-Informationen, wobei die Seite einen Satz von einem oder mehreren Symbolen umfasst, wobei jedes Symbol einem elektronischen Ausbildungs-Gerät (40, 1040, 2114) aus dem Satz von einem oder mehreren elektronischen Ausbildungs-Geräten (40, 1040, 2114) entspricht;
Empfangen von Symbol-Auswahl-Informationen von mindestens einem Client-Computer (28, 1010) bei dem Geräte-Controller (24, 1024), wobei die Symbol-Auswahl-Informationen vom Benutzer bei mindestens einem Client-Computer (28, 1010) durch die Auswahl einer der Symbole aus dem Satz von einem oder mehreren Symbolen erlangt wird;
Übertragen der Symbol-Auswahl-Informationen von dem Geräte-Controller (24, 1024) zu dem Server-Controller (20, 1020, 2210);
Empfangen der Eingabe-Fenster-Informationen von dem Server-Controller (20, 1020, 2210) bei mindestens einem Client-Computer (28, 1010), wobei die Eingabe-Fenster-Informationen den Symbol-Auswahl-Informationen entsprechen;
Anzeigen eines Eingabe-Fensters zur Übertragung von Kontroll-Informationen zu dem elektronischen Ausbildungs-Gerät (40, 1040, 2114), das den Symbol-Auswahl-Informationen entspricht, auf mindestens einem Client-Computer (28, 1010) in Erwiderung auf den Empfang der Eingabe-Fenster-Informationen;
Empfangen der Kontroll-Informationen, die zumindest eine Anweisung hinsichtlich der als Teil der Ausbildungs-Übung vom Benutzer über das Eingabe-Fenster auszuführende Aufgabe, widerspiegeln, beim Geräte-Controller (24, 1024), und
Übertragen der Kontroll-Informationen von dem Geräte-Controller (24, 1024) zu mindestens einem der elektronischen Ausbildungs-Geräte (40, 1040, 2114) aus dem Satz von einem oder mehreren elektronischen Ausbildungs-Geräten (40, 1040, 2114), so dass der Benutzer Kontrolle über das elektronische Ausbildungs-Gerät (40, 1040, 2114) ausüben kann.

26. Das System nach einem der Ansprüche 7 und 8 oder die Methode nach einem der Ansprüche 24 und 25, wobei die Seite ferner einen Satz von Overhead-Schaltflächen beinhaltet, von denen jede einer Overhead-Funktion entspricht, die auf einem oder mehreren aus dem Satz von elektronischen Ausbildungs-Geräten (40, 1040, 2114) ausführbar ist, die ferner umfassen:
Empfangen der Overhead-Schaltflächen-Informationen von einem Benutzer in Erwiderung auf einen Benutzer, der eine der Overhead-Schaltflächen auswählt, wobei die Overhead-Funktions-Informationen in Erwiderung auf die Auswahl der Overhead-Schaltflächen zu einem oder mehreren elektronischen Ausbildungs-Geräten (40, 1040, 2114) übertragen wird; und
wobei die Overhead-Schaltfläche mindestens eine Funktion aus der Gruppe zum Reset eines oder mehrerer Geräte aus dem Satz von einem oder mehreren elektronischen Ausbildungs-Geräten (40, 1040, 2114) beinhaltet, wobei eine Konfiguration eines oder mehrerer elektronischer Ausbildungs-Geräte aus dem Satz von einem oder mehreren Ausbildungs-Geräten (40, 1040, 2114) gespeichert wird und eine Konfiguration in ein oder mehrere elektronische Ausbildungs-Geräte (40, 1040, 2114) aus dem Satz von einem oder mehreren elektronischen Ausbild-ungs-Geräten (40, 1040, 2114) geladen wird.

27. Das System eines der Ansprüche 7 und 8 oder die Methode nach einem der Ansprüche 24 und 25, wobei die Seite ferner einen Satz von Navigations-Schaltflächen beinhaltet, wobei jede einer mit der Ausbildungs-Übung verbundenen Seite entspricht, die ferner umfassen:
Empfangen der Navigations-Schaltflächen-Auswahl-Informationen in Erwiderung auf einen Benutzer, der eine aus dem Satz der Navigations-Schaltflächen auswählt; und
Anzeigen einer neuen Seite, die mit der in Erwiderung auf den Empfang der Navigations-Schaltflächen-Auswahl-Informationen ausgewählten Navigations-Schaltfläche verbunden ist.

28. Das System oder die Methode nach Anspruch 27, wobei die neue Seite, die mit der Navigations-Schaltfläche verbunden ist, Informationen hinsichtlich von Anweisungen zur Ausführung der Ausbildungs-Übung beinhaltet.

29. Das System oder die Methode nach Anspruch 27, wobei die neue Seite, die mit der Navigations-Schaltfläche verbunden ist, Informationen hinsichtlich eines Szenariums und einer Zuweisung für die Ausbildungs-Übung beinhaltet.

30. Das System oder die Methode nach Anspruch 27, wobei die neue Seite, die mit der Navigations-Schaltfläche verbunden ist, Informationen hinsichtlich des Mentorings beinhaltet.

31. Das System oder die Methode nach Anspruch 27, wobei die neue Seite, die mit der Navigations-Schaltfläche verbunden ist, Informationen hinsichtlich einer empfohlenen Annäherung für die Ausbildungs-Übung beinhaltet.

32. Das System oder die Methode nach Anspruch 27, wobei die neue Seite, die mit der Navigations-Schaltfläche verbunden ist, Informationen hinsichtlich einer Musterlösung für die Ausbildungs-Übung beinhaltet.

33. Das System oder die Methode nach Anspruch 27, wobei die neue Seite, die mit der Navigations-Schaltfläche verbunden ist, Informationen hinsichtlich eines Plans für die Ausbildungs-Übung beinhaltet.

34. Das System oder die Methode nach Anspruch 27, wobei die neue Seite, die mit der Navigations-Schaltfläche verbunden ist, Informationen hinsichtlich der mit der Ausbildungs-Übung verbundenen Ergebnisse beinhaltet.

35. Die Methode nach Anspruch 19, die ferner umfasst:
Übertragen einer ersten Stufe der Hilfe-Informationen hinsichtlich von allgemeinen Informationen zur Erledigung der Aufgabe von dem Server-Controller (20, 1020, 2210) zu dem Client-Computer (28, 1010) auf Anforderung des Benutzers; und
Übertragen einer zweiten Stufe der Hilfe-Informationen hinsichtlich von detaillierten Informationen zur Erledigung der Aufgabe von dem Server-Controller (20, 1020, 2210) zu mindestens einem Client-Computer (28, 1010) auf Anforderung des Benutzers.

36. Die Methode nach Anspruch 35, die ferner die Übertragung von Informationen hinsichtlich der Ausbildungs-Übung von dem Server-Controller (20, 1020, 2210) zu dem Client-Computer (28, 1010) auf Anforderung des Benutzers umfasst, wobei die hinsichtlich der Ausbildungs-Übung zur Verfügung gestellten Informationen zumindest eine aus der Gruppe der Schwierigkeitsstufen für die Ausbildungs-Übung beinhalten, eine erwartete Zeit zur Erledigung der Ausbildungs-Übung, Urheberschaft für die Ausbildungs-Übung und eine Auflistung der mit der Ausbildungs-Übung verbundenen Fähigkeiten.

37. Die Methode nach Anspruch 35, die ferner die Übertragung von Informationen hinsichtlich eines Kontexts für die Ausbildungs-Übung von dem Server-Controller (20, 1020, 2210) zu dem Client-Computer (28, 1010) auf Anforderung des Benutzers umfasst, zur Erläuterung der Beziehung zwischen der Ausbildungs-Übung und einem Wirklichkeits-Szenarium.

38. Die Methode nach Anspruch 35, die ferner die Übertragung von Informationen hinsichtlich einer Annäherung zur Erledigung der Ausbildungs-Übung von dem Server-Controller (20, 1020, 2210) zu dem Client-Computer (28, 1010) auf Anforderung des Benutzers umfasst.

39. Die Methode nach Anspruch 35, die ferner die Übertragung von Informationen hinsichtlich einer Musterlösung zur Erledigung der Ausbildungs-Übung von dem Server-Controller (20, 1020, 2210) zu dem Client-Computer (28, 1010) auf Anforderung des Benutzers umfasst.

40. Die Methode nach Anspruch 19, die ferner die auf den Kontroll-Informationen von dem Client-Computer (28, 1010) basierte Beurteilung des Benutzers umfasst.

41. Die Methode nach Anspruch 40, die ferner umfasst:
Untersuchen einer Geräte-Konfiguration für mindestens ein elektronisches Ausbildungs-Gerät (40, 1040, 2114) aus dem Satz der elektronischen Ausbildungs-Geräte (40, 1040, 2114); und
Vergleichen der Geräte-Konfiguration mit der erwarteten Konfiguration.

42. Die Methode nach Anspruch 40, die ferner die Übertragung von Informationen hinsichtlich von Abweichungen zwischen der Geräte-Konfiguration und der erwarteten Konfiguration zu dem Client-Computer (28, 1010) umfasst.

43. Die Methode nach Anspruch 40, die ferner umfasst:
Erlangen eines Status für mindestens ein elektronisches Ausbildungs-Gerät (40, 1040, 2114) aus dem Satz der elektronischen Ausbildungs-Geräte (40, 1040, 2114); und
Vergleichen des erlangten Status mit dem erwarteten Status.

44. Die Methode nach Anspruch 40, die ferner die Übertragung einer Note für die Ausbildungs-Übung zu dem Client-Computer (28, 1010) umfasst.

45. Das System nach Anspruch 1 oder die Methode nach Anspruch 19, wobei mindestens eines aus dem Satz der elektronischen Ausbildungs-Geräte (40, 1040, 2114) ein Router ist.

46. Das System nach Anspruch 1 oder die Methode nach Anspruch 19, wobei mindestens eines aus dem Satz der elektronischen Ausbildungs-Geräte (40, 1040, 2114) ein Switch ist.

47. Das System nach Anspruch 1 oder die Methode nach Anspruch 19, wobei mindestens eines aus dem Satz der elektronischen Ausbildungs-Geräte (40, 1040, 2114) ein Computer ist.

## Revendications

1. Un système pour l'entraînement des utilisateurs, qui comprend :
un contrôleur de dispositifs (24, 1024) qui est capable de recevoir une information de contrôle provenant d'au moins un ordinateur client (28,1010), cette information de contrôle reflétant au moins une tâche qui va être menée à bien par un ou plusieurs dispositifs d'entraînement électronique (40, 1040, 2114) en tant que partie d'un exercice d'entraînement, et ce contrôleur de dispositifs (24, 1024) est capable de transmettre l'information de contrôle à au moins un des dispositifs d'entraînement électronique (40, 1040), 2114) en tant que partie de l'exercice d'entraînement ; et
un contrôleur de serveur (20, 1020, 2210) qui est capable de recevoir une information de commencement d'exercice qui reflète une demande provenant d'au moins un ordinateur client (28, 1010) de commencer un exercice d'entraînement, déterminer l'information de départ basée sur l'information de commencement d'exercice reçue, et transmettre l'information de départ au contrôleur de dispositifs (24, 1024) dans le but de démarrer un ensemble d'un ou plusieurs dispositifs d'entraînement électronique (40, 1040, 2114) d'après l'information de départ ;
dans lequel le contrôleur de serveur (20, 1020, 2210) et le contrôleur de dispositifs (24, 1024) sont connectés à au moins un ordinateur client (28, 1010) au moyen d'un réseau.

2. Le système de la revendication 1, dans lequel il existe un firewall (16, 1018) entre le réseau et le contrôleur de dispositifs (24, 1024), dans lequel le contrôleur de serveur (20, 1020, 2210) est de plus capable de transmettre une information relative à l'accès au firewall (16, 1018) en réponse à la réception d'une information de départ d'exercice de sorte qu'il est permis à au moins un ordinateur client (28, 1010) d'accéder à l'ensemble d'un ou plusieurs dispositifs d'entraînement électronique (40, 1040, 2114) à travers le firewall (16, 1018).

3. Le système de la revendication 2, dans lequel le réseau comprend un Internet ou un Intranet.

4. Le système de la revendication 1, dans lequel le contrôleur de dispositifs (24, 1024) comprend de plus
un dispositif de supervision (902, 2112, 2228) pour permettre qu'un ordinateur tuteur (906) reçoive une information transmise depuis au moins un ordinateur client (28, 1010) vers un ou plusieurs dispositifs d'entraînement électronique (40, 1040, 2114).

5. Le système de la revendication 1, qui comprend de plus :
un deuxième ensemble d'un ou plusieurs dispositifs d'entraînement électronique (40, 1040, 2114) connectés au contrôleur de serveur (20, 1020, 2210) et un contrôleur de dispositifs (24, 1024), dans lequel un dispositif d'entraînement électronique (40, 1040, 2114) dans l'ensemble d'un ou plusieurs dispositifs d'entraînement électronique (40, 1040, 2114) est peut être réassigné au deuxième ensemble d'un ou plusieurs dispositifs d'entraînement électronique (40, 1040, 2114).

6. Le système de la revendication 1, qui comprend de plus :
un ordinateur tuteur (906) qui est connecté au contrôleur de dispositifs (24, 1024); et
dans lequel le contrôleur de dispositifs (24, 1024) sert de plus à recevoir l'information de contrôle du tuteur qui reflète au moins une instruction provenant de l'ordinateur tuteur (906) relative à la tâche qui va être menée à bien en tant que partie de l'exercice d'entraînement, dans le but de faire voir dans au moins un ordinateur client (28, 1010) comment mener à bien cette tâche, transmettre l'information de contrôle du tuteur à n'importe quel dispositif d'entraînement électronique (40, 1040, 2114) ; et
dans lequel l'ensemble d'un ou plusieurs dispositifs sert de plus à recevoir l'information de contrôle du tuteur transmise depuis le contrôleur de dispositifs (24, 1024), mener à bien une opération associée à l'information de contrôle du tuteur, fournir un résultat de l'opération d'au moins un ordinateur client (28, 1010) et l'ordinateur tuteur (906) au moyen du contrôleur de dispositifs (24, 1024).

7. Le système de la revendication 1, dans lequel le contrôleur de serveur (20, 1020, 2210) est de plus capable de :
transmettre à l'ordinateur client (28, 1010) une information de page de sorte que l'ordinateur client (28, 1010) affiche une page qui inclut un ensemble d'une ou plusieurs icônes, dans laquelle chaque icône correspond à un dispositif d'entraînement électronique (40, 1040, 2114) dans l'ensemble d'un ou plusieurs dispositifs
d'entraînement électronique (40, 1040, 2114),
recevoir l'information sur la sélection d'icônes provenant de l'ordinateur client (28, 1010) ;
dans lequel l'information sur la sélection d'icônes est obtenue par un utilisateur en sélectionnant une des icônes de l'ensemble d'une ou plusieurs icônes affichées dans l'ordinateur client (28, 1010),
transmettre à l'ordinateur client (28, 1010), en réponse à la réception de l'information sélection d'icônes, une information sur fenêtre d'entrée de sorte que l'ordinateur client (28, 1010) affiche une fenêtre d'entrée pour recevoir une information de contrôle pour le dispositif d'entraînement électronique (40, 1040, 2114) correspondant à l'icône sélectionnée ; et
dans lequel l'information de contrôle est introduite dans l'ordinateur client (28, 1010) en utilisant la fenêtre d'entrée.

8. Le système de la revendication 1, dans lequel l'ordinateur client (28, 1010) inclut de plus :
un dispositif de stockage ; et
au moins un processeur connecté au dispositif de stockage, ce processeur étant opératif pour :
recevoir une information de page provenant du contrôleur de serveur (20, 1020, 2210);
afficher une page d'après l'information de page, laquelle page inclut un ensemble d'une ou plusieurs icônes, dans lequel chaque icône correspond à un dispositif d'entraînement électronique (40, 1040, 2114) dans l'ensemble d'un ou plusieurs dispositifs d'entraînement électronique (40, 1040, 2114),
recevoir une information sur la sélection d'icônes provenant d'un utilisateur, dans laquelle l'information sur la sélection d'icônes est obtenue par un utilisateur en sélectionnant une des icônes de l'ensemble d'une ou plusieurs icônes,
recevoir une information sur fenêtre d'entrée d'après l'information sur la sélection d'icônes provenant du contrôleur de serveur (20, 1020, 2210) ;
afficher, d'après l'information sur fenêtre d'entrée reçue, une fenêtre d'entrée pour transmettre une information de contrôle au dispositif d'entraînement électronique qui correspond à l'icône sélectionnée ;
recevoir une information de contrôle qui reflète au moins une instruction relative à une tâche qui doit va être menée à bien en tant que partie d'un exercice d'entraînement provenant de l'utilisateur au moyen de la fenêtre d'entrée ; et
transmettre l'information de contrôle au dispositif d'entraînement électronique (40, 1040, 2114) qui correspond à l'icône sélectionnée au moyen du contrôleur de dispositifs (24, 1024) de sorte que l'utilisateur puisse exercer un contrôle sur le dispositif d'entraînement électronique (40, 1040, 2114) dans le but de mener à bien l'exercice d'entraînement.

9. Le système de la revendication 1, dans lequel le contrôleur de serveur (20, 1020, 2210) est de plus capable de :
transmettre, sur demande de l'utilisateur, un premier niveau d'information d'aide à au moins un ordinateur client (28, 1010) relatif à une information générale sur la résolution de la tâche, et
transmettre, sur demande de l'utilisateur, un deuxième niveau d'information d'aide à au moins un ordinateur client (28, 1010) relatif à une information détaillée sur la résolution de la tâche.

10. Le système de la revendication 9, dans lequel le contrôleur de serveur (20, 1020, 2210) est de plus capable de :
transmettre, sur demande de l'utilisateur, une information relative à l'exercice d'entraînement à l'ordinateur client (28, 1010), dans lequel l'information fournie relative à l'exercice d'entraînement inclut au moins une information procédant du groupe de niveau de difficulté pour l'exercice d'entraînement, temps prévu pour terminer l'exercice d'entraînement, désignation de l'auteur pour l'exercice d'entraînement, et une liste des capacités associées à l'exercice d'entraînement.

11. Le système de la revendication 9, dans lequel le contrôleur de serveur (20, 1020, 2210) est de plus capable de :
transmettre, sur demande de l'utilisateur, une information relative à un contexte pour l'exercice d'entraînement à l'ordinateur client (28, 1010) pour expliquer une relation entre l'exercice d'entraînement et une situation du monde réel.

12. Le système de la revendication 9, dans lequel le contrôleur de serveur (20, 1020, 2210) est de plus capable de :
transmettre, sur demande de l'utilisateur, une information relative à une approche pour résoudre l'exercice d'entraînement.

13. Le système de la revendication 9, dans lequel le contrôleur de serveur (20, 1020, 2210) est de plus capable de :
transmettre, sur demande de l'utilisateur, une information relative à un exemple de solution pour résoudre l'exercice d'entraînement.

14. Le système de la revendication 1, qui comprend de plus un système d'évaluation connecté à au moins un ordinateur client (28, 1010), ce système d'évaluation étant opératif pour évaluer un utilisateur sur l'ordinateur client (28, 1010) en se basant sur l'information de contrôle provenant de l'ordinateur client (28, 1010).

15. Le système de la revendication 14, dans lequel le système d'évaluation est de plus capable d'examiner une configuration de dispositif d'au moins un dispositif d'entraînement électronique (40, 1040, 2114) dans l'ensemble des dispositifs d'entraînement électronique (40, 1040, 2114), et de comparer la configuration du dispositif avec une configuration prévue.

16. Le système de la revendication 14, dans lequel le système d'évaluation est de plus capable d'obtenir un état d'au moins un dispositif d'entraînement électronique (40, 1040, 2114) dans l'ensemble des dispositifs d'entraînement électronique (40, 1040, 2114), et de comparer l'état obtenu avec un état prévu.

17. Le système de la revendication 14, dans le lequel le système d'évaluation est de plus capable de transmettre à l'ordinateur client (28, 1010) une information relative à des différences entre la configuration du dispositif et la configuration prévue.

18. Le système de la revendication 14, dans le lequel le système d'évaluation est de plus capable de transmettre à l'ordinateur client (28, 1010) une qualification pour l'exercice d'entraînement.

19. Un procédé pour l'entraînement des utilisateurs mené à bien par un système d'entraînement qui possède au moins un ordinateur client (28, 1010) connecté à un contrôleur de dispositifs (24,1024) et un contrôleur de serveur (20, 1020, 2210) au moyen d'un réseau, et dans lequel un utilisateur particulier utilise au moins un ordinateur client (28, 1010) pour communiquer avec le contrôleur de serveur (20, 1020,2210) et le contrôleur de dispositifs (24, 1024), ce procédé pouvant :
recevoir une information de commencement d'exercice dans le contrôleur de serveur (24, 1024) qui reflète une demande provenant d'au moins un ordinateur client (28, 1010) de commencer un exercice d'entraînement ;
déterminer l'information de départ basée sur l'information de commencement d'exercice reçue par le contrôleur de serveur (20, 1020, 2210);
transmettre l'information de départ provenant du contrôleur de serveur (24, 1024) au contrôleur de dispositifs (24, 1024) dans le but de démarrer un ensemble d'un ou plusieurs dispositifs d'entraînement électronique (40, 1040,2114) d'après l'information de départ ;
recevoir une information de contrôle dans le contrôleur de dispositifs (24, 1024) qui reflète au moins une tâche qui va être menée à bien par un ou plusieurs dispositifs d'entraînement électronique (40, 1040, 2114) en tant que partie de l'exercice d'entraînement ; et
transmettre l'information de contrôle provenant du contrôleur de dispositifs (24, 1024) à au moins un dispositif d'entraînement électronique (40, 1040, 2114) dans l'ensemble d'un ou plusieurs dispositifs (40, 1040, 2114).

20. Le procédé de la revendication 19, qui comprend de plus la réassignation d'au moins un dispositif d'entraînement électronique (40, 1040, 2114) dans l'ensemble d'un ou plusieurs dispositifs d'entraînement électronique (40, 1040, 2114) à un deuxième ensemble d'un ou plusieurs dispositifs d'entraînement électronique (40, 1040, 2114).

21. Le procédé de la revendication 19, dans lequel un ordinateur tuteur (906) est connecté au contrôleur de dispositifs (24, 1024), qui peut de plus :
recevoir une information de contrôle dans le contrôleur de dispositifs (24, 1024) qui reflète au moins une instruction provenant de l'ordinateur tuteur (906) relative à une tâche qui va être menée à bien en tant que partie de l'exercice d'entraînement afin de faire voir à au moins un ordinateur client (28, 1010) comment mener à bien cette tâche ;
mener à bien une opération associée à un ou plusieurs dispositifs d'entraînement électronique (40, 1040, 2114) en réponse à au moins une instruction ; et
fournir un résultat de l'opération à l'ordinateur tuteur (906) et à au moins un ordinateur client (28, 1010).

22. Le procédé de la revendication 19, dans lequel il existe un firewall (16, 1018) entre le réseau et le contrôleur de dispositifs (24, 1024), qui peut de plus :
transmettre une information sur l'accès au firewall (16, 2228) en réponse à la réception d'une information de commencement d'exercice de sorte qu'il est permis à au moins un ordinateur client (28, 1010) d'accéder à un ou plusieurs dispositifs d'entraînement électronique (40, 1040, 2114) à travers le firewall (16, 1018).

23. Le procédé de la revendication 19, dans lequel le contrôleur de dispositifs (24, 1024) inclut un dispositif de supervision (902, 2112, 2228), qui peut de plus :
recevoir une information de contrôle provenant d'au moins un ordinateur client (28, 1010) dans le dispositif de supervision (902, 2112, 2228) ; et
transmettre l'information de contrôle reçue dans le dispositif de supervision (902, 2112, 2228) à un ordinateur tuteur (906).

24. Le procédé de la revendication 19, qui peut de plus :
transmettre depuis le contrôleur de serveur (20, 1020, 2210) à l'ordinateur client (28, 1010) une information de page, de sorte que l'ordinateur client (28, 1010) affiche une page qui inclut un ensemble d'une ou plusieurs icônes, dans laquelle chaque icône correspond à un dispositif d'entraînement électronique (40, 1040, 2114) dans l'ensemble d'un ou plusieurs dispositifs d'entraînement électronique (40, 1040, 2114) ;
recevoir dans le contrôleur de serveur (20, 1020, 2210) une information sur la sélection d'icônes provenant de l'ordinateur client (28, 1010) en réponse à un utilisateur qui sélectionne une des icônes dans l'ensemble d'une ou plusieurs icônes affichées dans l'ordinateur client (28, 1010);
transmettre depuis le contrôleur de serveur (20, 1020, 2210) à l'ordinateur client (28, 1010), en réponse à la réception de l'information sur la sélection d'icônes, une information sur fenêtre d'entrée de sorte que l'ordinateur client (28, 1010) affiche une fenêtre d'entrée pour recevoir une information de contrôle pour le dispositif d'entraînement électronique qui correspond à l'icône sélectionnée, dans lequel l'information de contrôle est introduite dans l'ordinateur client (28, 1010) en utilisant la fenêtre d' entrée ; et
transmettre l'information de contrôle provenant du contrôleur de dispositifs (24, 1024) au dispositif d'entraînement électronique (40, 1040, 2114) qui correspond à l'icône sélectionnée de sorte que l'utilisateur peut exercer un contrôle sur le dispositif d'entraînement électronique (40, 1040, 2114).

25. Le procédé de la revendication 19, qui peut de plus :
recevoir une information de page dans au moins un ordinateur client (28, 1010) provenant du contrôleur de serveur (20, 1020, 2210) ;
afficher une page dans au moins un ordinateur client (28, 1010) d'après l'information de page, laquelle page inclut un ensemble d'une ou plusieurs icônes, dans lequel chaque icône correspond à un dispositif d'entraînement électronique (40, 1040, 2114) dans l'ensemble d'un ou plusieurs dispositifs d'entraînement électronique (40, 1040, 2114) ;
recevoir une information sur la sélection d'icônes dans le contrôleur de dispositifs (24, 1024) provenant d'au moins un ordinateur client (28, 1010), dans lequel l'information sur la sélection d'icônes est obtenue par un utilisateur dans au moins un ordinateur client (28, 1010) en sélectionnant une des icônes dans l'ensemble d'une ou plusieurs icônes ;
transmettre l'information sur la sélection d'icônes du contrôleur de dispositifs (24, 1024) vers le contrôleur de serveur (20, 1020, 2210) ;
recevoir une information sur fenêtre d'entrée dans au moins un ordinateur client (28, 1010) provenant du contrôleur de serveur (20, 1020, 2210), cette information sur fenêtre d'entrée correspondant à l'information sur la sélection d'icônes ;
afficher dans au moins un ordinateur client (28, 1010), en réponse à la réception de l'information sur fenêtre d'entrée, une fenêtre d'entrée pour transmettre une information de contrôle au dispositif d'entraînement électronique (40, 1040, 2114) qui correspond à l'information sur la sélection d'icônes ;
recevoir dans le contrôleur de dispositifs (24, 1024) l'information de contrôle qui reflète au moins une instruction relative à la tâche qui va être menée à bien en tant que partie d'un exercice d'entraînement provenant de l'utilisateur au moyen de la fenêtre d'entrée, et
transmettre l'information de contrôle provenant du contrôleur de dispositifs (24, 1024) à au moins un des dispositifs d'entraînement électronique (40, 1040, 2114) dans un ensemble d'un ou plusieurs dispositifs d'entraînement électronique (40, 1040, 2114), de sorte que l'utilisateur puisse exercer un contrôle sur le dispositif d'entraînement électronique (40, 1040, 2114).

26. Le système de n'importe laquelle des revendications 7 et 8 ou le procédé de n'importe laquelle des revendications 24 et 25, dans lequel la page inclut de plus un ensemble de boutons auxiliaires, chacun de ces boutons correspondant à une fonction auxiliaire applicable à un ou plusieurs dispositifs de l'ensemble d'un ou plusieurs dispositifs d'entraînement électronique (40, 1040, 2114), qui peut de plus :
recevoir une information sur la sélection de bouton auxiliaire provenant d'un utilisateur en réponse à un utilisateur qui sélectionne un des boutons auxiliaires ; dans lequel l'information sur la fonction auxiliaire est transmise à un ou plusieurs dispositifs d'entraînement électronique (40, 1040, 2114) en réponse à la sélection du bouton auxiliaire ; et
dans lequel le bouton auxiliaire inclut au moins une fonction du groupe de réajuster un ou plusieurs des dispositifs dans l'ensemble d'un ou plusieurs dispositifs d'entraînement électronique (40, 1040, 2114), sauvegarder une configuration d'un ou plusieurs des dispositifs dans l'ensemble d'un ou plusieurs dispositifs d'entraînement électronique (40, 1040, 2114), et charger une configuration dans un ou plusieurs des dispositifs d'entraînement électronique (40, 1040, 2114) dans l'ensemble d'un ou plusieurs dispositifs d'entraînement électronique (40, 1040, 2114).

27. Le système de n'importe laquelle des revendications 7 et 8 ou le procédé de n'importe laquelle des revendications 24 et 25, dans lequel la page inclut de plus un ensemble de boutons de navigation, chacun de ces boutons correspondant à une page associée à l'exercice d'entraînement, qui peut de plus :
recevoir une information sur la sélection de bouton de navigation en réponse à un utilisateur qui sélectionne un bouton de l'ensemble des boutons de navigation ; et
afficher une nouvelle page associée au bouton de navigation sélectionné en réponse à la réception de l'information sur la sélection de bouton de navigation.

28. Le système ou le procédé de la revendication 27, dans lequel la nouvelle page associée au bouton de navigation inclut une information relative à des instructions pour mener à bien l'exercice d'entraînement.

29. Le système ou le procédé de la revendication 27, dans lequel la nouvelle page associée au bouton de navigation inclut une information relative à une situation et une assignation pour l'exercice d'entraînement.

30. Le système ou le procédé de la revendication 27, dans lequel la nouvelle page associée au bouton de navigation inclut une information relative au tutorial.

31. Le système ou le procédé de la revendication 27, dans lequel la nouvelle page associée au bouton de navigation inclut une information relative à une approche suggérée pour l'exercice d'entraînement.

32. Le système ou le procédé de la revendication 27, dans lequel la nouvelle page associée au bouton de navigation inclut une information relative à un exemple de solution pour l'exercice d'entraînement.

33. Le système ou le procédé de la revendication 27, dans lequel la nouvelle page associée au bouton de navigation inclut une information relative à un plan pour l'exercice d'entraînement.

34. Le système ou le procédé de la revendication 27, dans lequel la nouvelle page associée au bouton de navigation inclut une information relative à des résultats associés à l'exercice d'entraînement.

35. Le procédé de la revendication 19, qui peut de plus :
transmettre, sur demande de l'utilisateur, un premier niveau d'information d'aide à l'ordinateur client (28, 1010) provenant du contrôleur de serveur (20, 1020, 2210) relatif à une information générale sur la résolution de la tâche ; et
transmettre, sur demande de l'utilisateur, un deuxième niveau d'information d'aide à l'ordinateur client (28, 1010) provenant du contrôleur de serveur (20, 1020, 2210) relatif à une information détaillée sur la résolution de la tâche.

36. Le procédé de la revendication 35, qui peut de plus transmettre, sur demande de l'utilisateur, une information relative à l'exercice d'entraînement à l'ordinateur client (28, 1010) provenant du contrôleur de serveur (20, 1020, 2210), dans lequel l'information fournie relative à l'exercice d'entraînement inclut au moins une information du groupe niveau de difficulté pour l'exercice d'entraînement, temps prévu pour terminer l'exercice d'entraînement, désignation de l'auteur pour l'exercice d'entraînement, et une liste des capacités associées à l'exercice d'entraînement.

37. Le procédé de la revendication 35, qui peut de plus transmettre, sur demande de l'utilisateur, une information relative à un contexte pour l'exercice d'entraînement à l'ordinateur client (28, 1010) provenant du contrôleur de serveur (20, 1020, 2210) pour décrire une relation entre l'exercice d'entraînement et une situation du monde réel.

38. Le procédé de la revendication 35, qui peut de plus transmettre, sur demande de l'utilisateur, une information relative à une approche permettant de résoudre l'exercice d'entraînement à l'ordinateur client (28, 1010) provenant du contrôleur de serveur (20, 1020,2210).

39. Le procédé de la revendication 35, qui peut de plus transmettre, sur demande de l'utilisateur, une information relative à un exemple de solution pour résoudre l'exercice d'entraînement à l'ordinateur client (28, 1010) provenant du contrôleur de serveur (20, 1020,2210).

40. Le procédé de la revendication 19, qui peut de plus évaluer l'utilisateur en se basant sur l'information de contrôle provenant de l'ordinateur client (28, 1010).

41. Le procédé de la revendication 40, qui peut de plus :
examiner une configuration de dispositif pour au moins un dispositif d'entraînement électronique (40, 1040, 2114) dans l'ensemble de dispositifs d'entraînement électronique (40, 1040, 2114); et
comparer la configuration du dispositif avec une configuration prévue.

42. Le système de la revendication 40, qui peut de plus transmettre à l'ordinateur client (28, 1010) une information relative à des différences entre la configuration du dispositif et la configuration prévue.

43. Le procédé de la revendication 40, qui peut de plus :
obtenir un état pour au moins un dispositif d'entraînement électronique (40, 1040, 2114) dans l'ensemble des dispositifs d'entraînement électronique (40, 1040, 2114) ; et comparer l'état obtenu avec un état prévu.

44. Le système de la revendication 40, qui peut de plus transmettre à l'ordinateur client (28, 1010) une qualification pour l'exercice d'entraînement.

45. Le système de la revendication 1 ou le procédé de la revendication 19, dans lequel au moins un dispositif de l'ensemble des dispositifs d'entraînement électronique (40, 1040, 2114) est un router.

46. Le système de la revendication 1 ou le procédé de la revendication 19, dans lequel au moins un dispositif de l'ensemble des dispositifs d'entraînement électronique (40, 1040, 2114) est un commutateur.

47. Le système de la revendication 1 ou le procédé de la revendication 19, dans lequel au moins un dispositif de l'ensemble des dispositifs d'entraînement électronique (40, 1040, 2114) est un ordinateur.
